# EUROPEAN PATENT APPLICATION

(11) **EP 4 415 181 A1**
(43) Date of publication of application: **14.08.2024**
(21) Application number: 24156184.4
(22) Date of filing: 07.02.2024
(51) Int. Cl.: H01R 13/00, B60R 16/023, B60R 16/033, B60R 16/03, B60L 1/02

(54) **IN-VEHICLE POWER SUPPLY SYSTEM AND VEHICLE**

(30) Priority: 08.02.2023 CN 202320288346 U; 24.07.2023 CN 202310916703
(71) Applicant: Huawei Digital Power Technologies Co., Ltd., Shenzhen, 518043 (CN)
(72) Inventor: ZHOU, Junlin, Shenzhen, 518043 (CN); CHEN, Taixian, Shenzhen, 518043 (CN); XIA, Quanfei, Shenzhen, 518043 (CN); XIE, Dejin, Shenzhen, 518043 (CN); CAO, Xiaowen, Shenzhen, 518043 (CN)
(74) Representative: Isarpatent

(57) **Abstract**

This application provides a splitter, an in-vehicle power supply system, and a vehicle. The splitter includes a splitter body, a busbar component, and a plurality of branch line components. At least one of the busbar component and the plurality of branch line components is detachably connected to the splitter body, to facilitate maintenance and replacement of an internal component of the splitter body. The busbar component includes a positive busbar and a negative busbar, and each branch line component includes a positive branch line and a negative branch line, so that the splitter has relatively high integration. One end of the positive busbar is electrically connected to one end of a positive branch line of each branch line component by using the splitter body, one end of the negative busbar is electrically connected to one end of a negative branch line of each branch line component by using the splitter body, the other end of the positive busbar and the other end of the negative busbar are configured to electrically connect to a power module, and the other end of the positive branch line and the other end of the negative branch line are configured to electrically connect to a load. The splitter provided in this application can reduce a quantity of external interfaces of the power module, thereby facilitating overall vehicle layout.

## Description

### TECHNICAL FIELD

This application relates to the field of splitter technologies, and in particular, to an in-vehicle power supply system and a vehicle.

### BACKGROUND

An in-vehicle power supply system includes a battery pack and a power distribution unit. The battery pack supplies power to different loads through independent connecting interfaces on the power distribution unit, and a fuse is disposed inside the power distribution unit to provide overcurrent protection. As the quantity of in-vehicle loads connected to the power distribution unit increases continuously, more connecting interfaces need to be disposed on the power distribution unit. As a result, a size of a power supply system component is increased, which is unfavorable to the overall vehicle layout, and complex cabling and the large size cause higher costs. In addition, when the fuse is being replaced, because the entire power distribution unit needs to be dismantled, operation difficulty and risks are increased.

### SUMMARY

This application provides an in-vehicle power supply system and a vehicle.

According to a first aspect, this application provides an in-vehicle power supply system. A splitter includes a splitter body, a busbar component, and a plurality of branch line components, and at least one of the busbar component and the plurality of branch line components is detachably connected to the splitter body, thereby reducing installation difficulty of the splitter. The busbar assembly includes a positive busbar and a negative busbar. Each of the branch line components includes a positive branch line and a negative branch line. One end of the positive busbar is electrically connected to one end of the positive branch line of each of the branch line components by using the splitter body, and one end of the negative busbar is electrically connected to one end of the negative branch line of each of the branch line components by using the splitter body. The other end of the positive busbar and the other end of the negative busbar are configured to be electrically connected to a power module. The other end of the positive branch line and the other end of the negative branch line are configured to be electrically connected to a load.

In this application, the splitter is disposed. First, the splitter is located outside a power distribution unit, and does not occupy internal space of the power distribution unit, so that a size of the power distribution unit is reduced. When the power distribution unit is applied to a vehicle, the reduced size of the power distribution unit facilitates overall vehicle layout.

Second, one splitter can split a current into a plurality of paths and supply power to a plurality of loads at the same time. This optimizes conventional centralized power distribution to distributed power distribution, reduces a quantity of peripheral connecting devices of the power distribution unit, saves costs, and facilitates a miniaturization design of the power distribution unit and the splitter, so that the power distribution unit and the splitter can adapt to various small-sized scenarios.

Third, one splitter involves both a positive busbar and a negative busbar, a plurality of positive branch lines, and a plurality of negative branch lines. The splitter is highly integrated, and only one splitter is required to form a loop between the power module and a plurality of loads. Cable bundle layout is simple and convenient, and manufacturing costs of the splitter and assembly difficulty of the in-vehicle power supply system can be reduced.

Fourth, at least one of the busbar component and the plurality of branch line components is detachably connected to the splitter body, and when a fault occurs, the entire in-vehicle power supply system does not need to be disassembled, thereby effectively reducing operation difficulty and costs of maintaining the splitter. In addition, during assembly, the splitter body and the detachably connected cable component part may be separately installed. For example, the splitter body may be first installed on the power distribution unit, and then the detachably connected cable component part is installed on the splitter body, so as to avoid an increase in installation difficulty due to too many cables and make installation more convenient.

In an implementation, a detachable connection manner includes a screw connection and a buckle and lock connection. In this way, implementation of detachable connection is simpler.

In an implementation, a component that is detachably connected to the splitter body and that is in the busbar component and the plurality of branch line components includes a cable connector and cables fastened in the cable connector, the splitter body includes a housing and a conductive component located in the housing, the cable connector is detachably connected to the housing, and one end of the cable in the cable connector is configured to electrically connect to the conductive component. When the cable connector is connected to the housing, one end of the cable in the cable connector is electrically connected to the conductive component. When the cable connector is separated from the housing, one end of the cable in the cable connector is disconnected from the conductive component.

In this implementation, a connection relationship between the cable connector and the housing is corresponding to an electrical connection relationship between the cable in the detachable cable component and the conductive component. Connection or separation between the cable connector and the housing enables the cable to be electrically connected to or disconnected from the conductive component quickly, thereby improving installation efficiency of the splitter. Connection and separation between the cable connector and the housing are relative and interchangeable states. When the detachable cable component or the conductive component that is electrically connected to the detachable cable component and that is inside the splitter needs to be replaced, the cable connector and the housing may be quickly disassembled for maintenance, so that it is more convenient to replace a component when a fault occurs.

In an implementation, a component that is in the busbar component and the plurality of branch line components and that is fixedly connected to the splitter body is a fixed cable component, and the fixed cable component further includes a fixed connector, where the fixed connector and the housing of the splitter body are integrally formed. One end of a cable in the fixed cable component is fastened in the fixed connector. The cable in the fixed cable component is fixedly connected to the housing and electrically connected to the conductive component in the housing by using the fixed connector.

In an implementation, the housing includes a housing body and a cable connection base located on an outer side of the housing body, and the cable connector is detachably connected to the cable connection base. When the cable connector is connected to the cable connection base, one end of the cable in the cable connector is electrically connected to the conductive component by using the cable connection base.

In this implementation, the cable connector is detachably connected to the cable connection base. A connection relationship between the cable connector and the cable connection base is corresponding to an electrical connection relationship between the cable in the detachable cable component and the conductive component. Connection or separation between the cable connector and the cable connection base enables the cable to be electrically connected to or disconnected from the conductive component quickly, thereby improving installation efficiency of the splitter. When the cable connector and the cable connection base are in a connected state, the cable connector and the cable connection base are relatively fixed to form a whole. In this case, the cable in the detachable cable component is electrically connected to the conductive component of the splitter body. When the cable connector and the cable connection base are in a disassembled state, the cable connector is separated from the cable connection base. In this case, the electrical connection between the cable in the detachable cable component and the conductive component of the splitter body is disconnected.

In an implementation, an arrangement direction of a positive branch line and a negative branch line in at least one of the plurality of branch line components is the same as an arrangement direction of the positive busbar and the negative busbar. All positive branch lines in the plurality of branch line components are disposed side by side, and an arrangement direction of the positive branch lines is perpendicular to the arrangement direction of the positive busbar and the negative busbar. In this implementation, the arrangement direction of all the positive branch lines and all the negative branch lines is the same as the arrangement direction of the positive busbar and the negative busbar, that is, an arrangement direction of a positive branch line and a negative branch line in each branch line component is the same as the arrangement direction of the positive busbar and the negative busbar, so that the positive busbar is more conveniently electrically connected to the positive branch line, and the negative busbar is more conveniently electrically connected to the negative branch line. In this way, external cables of the splitter are arranged in a more regular and orderly manner.

In an implementation, the splitter body includes a housing and a conductive component, where the housing includes a cover, a housing body, and a cable connection base located on an outer side of the housing body. The cable connection base includes a first mounting groove and a second mounting groove, the first mounting groove and the second mounting groove are arranged in a stacked manner along the outer side of the housing body, and space enclosed by the housing body and the cover is used to accommodate the conductive component. The conductive component includes two conductive terminals, one end of the two conductive terminals extends to the cable connection base, and a stacking direction of the two conductive terminals is the same as a stacking direction of the first mounting groove and the second mounting groove. In this implementation, the stacking direction of the two conductive terminals is set to be the same as the stacking direction of the first mounting groove and the second mounting groove, so that the cables in the cable connector can be quickly electrically connected to the two conductive terminals. A stacking direction of the cables in the cable connector, for example, the positive busbar and the negative busbar, is also the same as the stacking direction of the first mounting groove and the second mounting groove, so that the positive busbar and the negative busbar can be more stably inserted into the two mounting grooves, and the electrical connection with the two conductive terminals is more stable.

In an implementation, a component that is in the busbar component and the plurality of branch line components and that is detachably connected to the splitter body is the busbar component. In this way, the busbar component can be quickly connected to and removed from the splitter body.

In an implementation, the cable connector is a busbar connector, and the cables fastened in the cable connector are the positive busbar and the negative busbar in the busbar component. When the busbar connector and the cable connection base are in a connected state, the busbar connector and the cable connection base are relatively fixed to form a whole. In this case, the positive busbar and the negative busbar are electrically connected to the conductive component of the splitter body. When the busbar connector and the cable connection base are in a disassembled state, the busbar connector is separated from the cable connection base. In this case, electrical connections between the positive busbar and the conductive component of the splitter body and between the negative busbar and the conductive component are disconnected.

In an implementation, the component that is in the busbar component and the plurality of branch line components and that is detachably connected to the splitter body is one or more branch line components. In this way, the branch line component can be quickly connected to and removed from the splitter body.

In an implementation, the cable connector is a branch line connector, and is fastened to a positive branch line and a negative branch line in a branch line component in the cable connector. In this implementation, the branch line connector is detachably connected to the cable connection base. A connection relationship between the branch line connector and the cable connection base is corresponding to an electrical connection relationship between the conductive component and the positive branch line as well as the negative branch line. The branch line connector is connected to or separated from the cable connection base, so that the positive branch line and the negative branch line can be electrically connected to or disconnected from the conductive component quickly.

In an implementation, the component that is in the busbar component and the plurality of branch line components and that is detachably connected to the splitter body is all the branch line components. All the branch line components form a branch line combination, and the branch line combination is detachably connected to the splitter body. In this implementation, the branch line combination is detachably connected to the housing by using the cable connector, and is electrically connected to the conductive component in the housing. When the branch line combination or the conductive component that is electrically connected to the branch line combination and that is inside the splitter needs to be replaced, the cable connector and the housing may be quickly disassembled for maintenance, so that it is more convenient to replace a component when a fault occurs.

In an implementation, the cable connector is a branch line combination connector, one end of each positive branch line and one end of each negative branch line in the branch line combination are both fastened in the branch line combination connector, and the branch line combination connector is detachably connected to the housing. One end of each positive branch line and one end of each negative branch line in the branch line combination are configured to electrically connect to the conductive component. When the branch line combination connector is connected to the housing, one end of each positive branch line and one end of each negative branch line in the branch line combination are electrically connected to the conductive component. When the branch line connector is separated from the housing, one end of each positive branch line and one end of each negative branch line in the branch line combination are disconnected from the conductive component.

In this implementation, the branch line combination connector is detachably connected to the cable connection base of the housing. When the branch line combination connector is connected to the cable connection base, the branch line combination connector and the cable connection base are relatively fastened to form a whole. In this case, the positive branch line and the negative branch line are electrically connected to the conductive component of the splitter body. When the branch line combination connector and the cable connection base are in a disassembled state, the branch line combination connector is separated from the cable connection base. In this case, electrical connections between the positive branch line and the conductive component of the splitter body and between the negative branch line and the conductive component are disconnected. Shapes of two opposite end faces of the branch line combination connector and the cable connection base match, which helps improve structural stability when the branch line combination connector is in a connected state with the cable connection base.

In an implementation, the component that is in the busbar component and the plurality of branch line components and that is detachably connected to the splitter body is the busbar component and one branch line component or a plurality of branch line components. In this implementation, both the busbar connector and the branch line combination connector are detachably connected to the cable connection base. When the busbar connector and the branch line combination connector are connected to the cable connection base, both the busbar component and a branch line combination are electrically connected to the conductive component of the splitter body. When the busbar connector, the branch line combination connector, and the cable connection base are in a disassembled state, electrical connections between the busbar component and the conductive component of the splitter body and between the branch line combination and the conductive component are disconnected. Shapes of two opposite end faces of the branch line connector and the cable connection base match, which helps improve structural stability when the branch line connector is in a connected state with the cable connection base. In this embodiment, the busbar component and the plurality of branch line components are disposed to be detachably connected to the splitter body, so that convenience of disassembling and assembling the splitter can be improved, and difficulty and costs of replacing and maintaining components inside the splitter can be reduced.

In an implementation, the splitter body includes a housing and a conductive component located in the housing, the housing includes a housing body and a cover, the conductive component includes a plurality of fuses, and the plurality of fuses are located in space enclosed by the housing body and the cover. The plurality of fuses are disposed in a one-to-one correspondence with the positive branch lines, one end of the plurality of fuses is electrically connected to the positive busbar, and the other end of one fuse is electrically connected to one positive branch line. In this implementation, the fuses are disposed in the space enclosed by the housing body and the cover. When a fuse needs to be replaced, the housing body and the cover may be quickly disassembled, so that it is more convenient to replace the fuse when an overcurrent fault occurs. A quantity of fuses is equal to the quantity of positive branch lines, so that the fuses perform overcurrent protection on both the busbar component and each branch line component.

In an implementation, the plurality of fuses are alternatively disposed in a one-to-one correspondence with the negative branch lines. One end of the plurality of fuses is electrically connected to the positive busbar and the negative busbar, and the other end of the plurality of fuses is electrically connected to the positive branch lines and the negative branch lines. This solution helps enhance overcurrent protection for the splitter.

In an implementation, a busbar plug structure and a branch line plug structure are disposed in the housing body, the busbar plug structure is electrically connected to the positive busbar, and the branch line plug structure is electrically connected to the positive branch line. The fuse includes a fuse body and plug terminals located at two ends of the fuse body. The fuse body is fastened on a side of the cover facing the housing body, and when the cover and the housing body are assembled, the plug terminals at the two ends of the fuse body are respectively inserted into the busbar plug structure and the branch line plug structure, and are electrically connected to the busbar plug structure and the branch line plug structure.

In this implementation, the busbar plug structures and the branch line plug structures that are arranged in pairs are installed at and electrically connected to two ends of the fuse bodies in a one-to-one correspondence. The fuse is electrically connected between the positive busbar and the positive branch line. When a current on the positive branch line exceeds a preset value or the positive branch line is short-circuited, heat generated by the fuse melts the fuse body, so as to disconnect the circuit, thereby implementing circuit protection.

In an implementation, the fuse body may be made of materials such as copper, silver, zinc, aluminum, lead-tin alloy, and copper-silver alloy. These materials can fuse when a preset temperature is reached, so that the fuse has an overcurrent protection function.

In an implementation, the fuse is fastened on the inner side of the cover in advance, and the busbar plug structure and the branch line plug structure are disposed in the housing body. When the fuse is fastened inside the splitter, the cover and the housing body are assembled and fastened, so that the plug terminals at two ends of the fuse body are inserted into the busbar plug structure and the branch line plug structure inside the housing body. In this way, the fuse can be quickly installed in the splitter, so that installation is more convenient.

In an implementation, the fuse body and the cover may be elastically connected by using a slot, and the cover and the housing body may be connected by using a screw.

In an implementation, the busbar plug structure and the branch line plug structure are electrically connected to the busbar component and the plurality of branch line components respectively, to implement electrical connections between the fuses and the busbar component and between the fuses and the plurality of branch line components.

In an implementation, the splitter further includes a first interlock terminal and a second interlock terminal. The first interlock terminal is located in the housing, the second interlock terminal is located in the cable connector, one end of the second interlock terminal is configured to electrically connect to the first interlock terminal, and the other end of the second interlock terminal is configured to electrically connect to a control module. When the cable connector is connected to the housing, one end of the second interlock terminal is electrically connected to the first interlock terminal. In this implementation, the first interlock terminal in the housing is in contact with and electrically connected to the second interlock terminal in the cable connector, so that the first interlock terminal is connected to the second interlock terminal to form a loop. When the cable connector is disconnected from the housing, the first interlock terminal and the second interlock terminal are also disconnected, and the loop is cut off. Because the second interlock terminal is electrically connected to the control module, when the busbar component is loose or disconnected, whether the positive busbar and the negative busbar are connected to the splitter body completely and securely can be effectively determined by using a control signal of the control module, so as to ensure that fault processing is performed on the interlock disconnection in time, and implement security function control.

In an implementation, the conductive terminal is located in the housing body and extends to the cable connection base, and the first interlock terminal is located in the cable connection base. In this way, the first interlock terminal and the second interlock terminal can be electrically connected synchronously when the conductive terminal is electrically connected to the cable in the cable connector, so as to improve interlock monitoring accuracy.

In an implementation, two conductive terminals are disposed in the housing, and the first interlock terminal is located between the two conductive terminals. In this way, the conductive terminal and the first interlock terminal are disposed more properly, and the splitter is more compact.

In an implementation, the second interlock terminal is located between the positive busbar and the negative busbar, the first mounting groove and the second mounting groove are disposed in the cable connection base at an interval, and the first interlock terminal is located between the first mounting groove and the second mounting groove. The positive busbar is electrically connected to one of the conductive terminals after passing through the first mounting groove. The negative busbar is electrically connected to the other conductive terminal after passing through the second mounting groove. In this way, when the busbar connector is connected to the cable connection base, the first interlock terminal and the second interlock terminal can be connected more conveniently and quickly, and space in the busbar connector and the cable connection base can be fully used, thereby facilitating miniaturization of the splitter.

In an implementation, two spacers are disposed in the cable connection base at an interval, and the two spacers and an inner wall of the cable connection base form the first mounting groove and the second mounting groove. The two conductive terminals respectively extend from the housing body to the first mounting groove and the second mounting groove. The first interlock terminal is located between the two spacers. The first mounting groove and the second mounting groove are formed by using the spacers and the inner wall of the cable connection base, and the first interlock terminal is disposed between the two spacers, so that the first interlock terminal is isolated from the conductive terminals in the first mounting groove and the second mounting groove, electrical isolation is implemented, the splitter is safer, and monitoring precision of the interlock terminal is improved.

In an implementation, when the cable connection base is a busbar connection base, the first mounting groove and the second mounting groove are respectively configured to place the positive busbar and the negative busbar in the busbar component, so that when the busbar connector is connected to the busbar connection base, the positive busbar and the negative busbar are electrically connected to the two conductive terminals respectively.

In an implementation, when the cable connection base is a branch line connection base, the first mounting groove and the second mounting groove are respectively configured to place the positive branch line and the negative branch line in the branch line component, so that when the branch line connector is connected to the branch line connection base, the positive branch line and the negative branch line are electrically connected to the two conductive terminals respectively.

In an implementation, the two conductive terminals each are in a blade shape, and one end of each of the positive busbar and the negative busbar of the busbar component is in a slot shape, so that the blade is inserted into the slot, and the two conductive terminals are electrically connected to the positive busbar and the negative busbar.

In an implementation, at one end of the positive busbar and the negative busbar of the busbar component, the two conductive terminals are in a slot shape.

In an implementation, the positive branch line and the negative branch line of the branch line component are in one of a blade shape and a slot shape, and the two conductive terminals are in the other of the blade shape and the slot shape.

In an implementation, the second interlock terminal is electrically connected to the control module by using an interlock cable, and the interlock cable is located between the positive busbar and the negative busbar, or located between the positive branch line and the negative branch line.

In an implementation, the splitter further includes a temperature control element. The temperature control element is located in the housing, and the temperature control element is electrically connected to the first interlock terminal and is configured to monitor a temperature inside the splitter body. In this implementation, the temperature control element is a component whose electrical property (for example, resistance) changes with a temperature. For example, the temperature control element may be a temperature sensor. The temperature control element is connected to an interlock loop in which the first interlock terminal is located. When a temperature in the housing changes, the resistance of the temperature control element changes accordingly, so that a current in the interlock loop changes, and a temperature condition inside the housing may be correspondingly obtained by monitoring the current in the interlock loop.

In an implementation, a plurality of sealing rings are disposed inside the splitter, and the plurality of sealing rings form multi-level sealing, to isolate internal space of the splitter from an external environment, so as to prevent water vapor from entering the splitter and causing damage to internal components.

In an implementation, a boss is disposed on a surface that is of the cover and that faces the housing body, and sealing rings are disposed on a periphery of the boss and a periphery of an end face that is of the housing body and that faces the cover. Sealing rings are disposed in a circumferential direction on both a side that is of the cable connection base and that is close to the cable connector and a side that is of the cable connection base and that is away from the cable connector. The busbar connector is provided with a busbar threading hole, the busbar component enters the busbar connector through the busbar threading hole, and a sealing ring is disposed on an inner side that is of the busbar connector and that is close to the busbar threading hole. A branch line threading hole is disposed on the branch line connector. The branch line component enters the branch line connector through the branch line threading hole. A sealing ring is disposed on an inner side that is of the branch line connector and that is close to the branch line threading hole.

In an implementation, the splitter further includes a micro switch. The housing of the splitter body includes a housing body and a cover, the micro switch is located in the housing body, and the micro switch is located between the cover and an insulation support part in the housing body. A base of the micro switch is fastened to the insulation support part, and a spring of the micro switch elastically abuts against the cover. The micro switch is configured to monitor a disassembling and disassembling status of the cover. In this implementation, when the cover and the housing body are assembled, the cover applies a specific elastic force to the micro switch, and the micro switch is connected to a loop inside the housing body. When the cover is separated from the housing body, the micro switch is no longer subject to an action force exerted by the cover, and the micro switch is disconnected from the loop, so as to release a control signal and perform a high-voltage power-off operation. The micro switch is disposed in the splitter, which helps monitor whether the connection between the cover and the housing body is loose or completely separated, and ensures prompt troubleshooting for disconnection of the cover, thereby implementing security function control.

In an implementation, the insulation support part may be a part of an insulator of the housing that is used to isolate the conductive component from the housing, or a protruding part additionally disposed in the housing, and is used to support and fasten the micro switch, so as to prevent the micro switch from shaking in the splitter, and improve monitoring accuracy of the micro switch.

In an implementation, both the positive branch line and the negative branch line of one of the plurality of branch line components are copper sheets, and the copper sheets are fixedly connected to the splitter body. The copper sheet may also be referred to as a copper bar. One end of the copper sheet is inserted into the fixed connector that is integrally formed with the housing, and the other end of the copper sheet is inserted into the load, and is fixedly connected to the load by using a screw. In this implementation, one of the plurality of branch line components is a copper sheet, the busbar component and remaining branch line components are cables, and the busbar component and the remaining branch line components are flexible. In one aspect, one end of the busbar component that is away from the splitter body may extend to a position of the power module based on a requirement. In another aspect, one end of the remaining branch line components that is away from the splitter body may extend to a load position of the vehicle based on a requirement. This improves flexibility of overall cabling.

In an implementation, the busbar component and at least one of the plurality of branch line components are located on a same side of the splitter body. In this implementation, an included angle between the busbar component and the plurality of branch line components is not limited, so that the splitter adapts to requirements of different installation scenarios. In this solution, the busbar component and at least one of the plurality of branch line components are disposed on the same side of the splitter body, which helps improve space utilization of one side of the splitter body. In an implementation, the busbar component and each of the plurality of branch line components are located on a same side of the splitter body. This solution helps to provide installation space for disposing more interfaces on other sides of the splitter body.

In an implementation, the busbar component and at least one of the plurality of branch line components are located on different sides of the splitter body. In this implementation, for example, the busbar component and the at least one branch line component may be disposed on two opposite sides of the splitter body, or may be disposed on two adjacent sides of the splitter body, so that there is a spatial spacing between the busbar component and the at least one branch line component, thereby avoiding mutual interference between the busbar component and the branch line component and reducing a wiring error.

In an implementation, two of the plurality of branch line components are located on different sides of the splitter body. When two of the plurality of branch line components are located on different sides of the splitter body, cabling of the two branch line components does not interfere with each other, and electrical interference generated by the two branch line components is reduced.

According to a second aspect, this application provides an in-vehicle power supply system, including a power module, a plurality of loads, and the splitter according to any one of the foregoing implementations. The power module is electrically connected to the other end of the positive busbar and the other end of the negative busbar, and a positive branch line and a negative branch line in each of the plurality of branch line components are electrically connected to one of the plurality of loads. The splitter in this application is applied to the in-vehicle power supply system. The splitter is connected to a power distribution unit and the plurality of loads, and the splitter combines power supply ports of different loads into a single power supply output port, and then supplies power to different loads by using the splitter. This can reduce a quantity of connecting devices between the power distribution unit and the loads, and can further reduce structural components on the power distribution unit, thereby facilitating overall vehicle layout.

According to a third aspect, this application provides a vehicle, including a vehicle body and the splitter according to any one of the foregoing implementations. The splitter is installed on an in-vehicle charging system of the vehicle body. Alternatively, the vehicle includes a vehicle body and the in-vehicle power supply system described above. The in-vehicle power supply system is installed on the vehicle body.

### BRIEF DESCRIPTION OF DRAWINGS

To describe the technical solutions in embodiments of this application more clearly, the following describes the accompanying drawings used in embodiments of this application.
FIG. 1 is a schematic diagram of a structure of a vehicle according to an embodiment of this application;
FIG. 2 is a schematic diagram of a structure of an in-vehicle power supply system according to an embodiment of this application;
FIG. 3 is a schematic diagram of a structure of a splitter according to a first embodiment of this application;
FIG. 4 is an exploded view of the splitter according to the first embodiment of this application;
FIG. 5 is a schematic diagram of a partial structure of the splitter according to the first embodiment of this application;
FIG. 6 is a schematic diagram of a partial structure of the splitter according to the first embodiment of this application;
FIG. 7 is a schematic diagram of structures of a cover and a fuse in the splitter according to the first embodiment of this application;
FIG. 8 is a schematic diagram of a partial structure of the splitter according to the first embodiment of this application;
FIG. 9 is a schematic diagram of a structure of the splitter according to the first embodiment of this application;
FIG. 10 is a sectional view of the splitter shown in FIG. 9 along AA;
FIG. 11 is a schematic diagram of a structure of the splitter according to the first embodiment of this application;
FIG. 12 is a sectional view of the splitter shown in FIG. 11 along BB;
FIG. 13 is a schematic diagram of a partial structure of the splitter according to the first embodiment of this application;
FIG. 14 is a sectional view of the splitter shown in FIG. 13 along CC;
FIG. 15 is a schematic diagram of a partial structure of the splitter according to the first embodiment of this application;
FIG. 16 is a sectional view of the splitter shown in FIG. 15 along DD;
FIG. 17 is a schematic diagram of a structure of a splitter according to a second embodiment of this application;
FIG. 18 is a schematic diagram of a partial structure of the splitter according to the second embodiment of this application;
FIG. 19 is a schematic diagram of a structure of a splitter according to a third embodiment of this application;
FIG. 20 is a schematic diagram of a structure of a splitter according to a fourth embodiment of this application;
FIG. 21 is a schematic diagram of a structure of the splitter according to the fourth embodiment of this application;
FIG. 22 is a schematic diagram of a structure of a splitter according to a fifth embodiment of this application;
FIG. 23 is a schematic diagram of a structure of the splitter according to the fifth embodiment of this application;
FIG. 24 is a schematic diagram of a structure of a splitter according to a sixth embodiment of this application;
FIG. 25 is a schematic diagram of a structure of the splitter according to the sixth embodiment of this application;
FIG. 26 is a schematic diagram of a structure of a splitter according to a seventh embodiment of this application;
FIG. 27 is a schematic diagram of a structure of a splitter according to an eighth embodiment of this application;
FIG. 28 is a partial exploded view of the splitter according to the eighth embodiment of this application;
FIG. 29 is a schematic diagram of a structure of a splitter according to a ninth embodiment of this application;
FIG. 30 is a partial exploded view of the splitter according to the ninth embodiment of this application;
FIG. 31 is a schematic diagram of a structure of an in-vehicle power supply system according to an embodiment of this application;
FIG. 32 is a schematic diagram of a structure of an in-vehicle power supply system according to an embodiment of this application;
FIG. 33 is a schematic diagram of a structure of an in-vehicle power supply system according to an embodiment of this application;
FIG. 34 is a schematic diagram of a structure of an in-vehicle power supply system according to an embodiment of this application; and
FIG. 35 is a schematic diagram of a structure of an in-vehicle power supply system according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature defined as "first" or "second" may explicitly or implicitly include one or more of the features. In the descriptions of this application, unless otherwise stated, "a plurality of means two or more than two.

In addition, in this specification, position terms such as "top" and "bottom" are defined relative to positions of structures in the accompanying drawings. It should be understood that these position terms are relative concepts used for relative description and clarification, and may correspondingly change based on changes in the positions of the structures.

For ease of understanding, the following first explains and describes English abbreviations and related technical terms used in embodiments of this application.

DCDC: DC is short for Direct Current. DCDC is an apparatus that converts direct current power of a specific voltage level into direct current power of another voltage level. The DCDC is classified into two types based on a voltage level conversion relationship: a boost power supply and a buck power supply. For example, a DCDC converter connected to an in-vehicle power supply system converts a high-voltage direct current into a low-voltage direct current.

Fuse: A fuse is an electrical device that uses heat generated by the fuse to melt the fuse body to disconnect a circuit when a current exceeds a specified value.

Verticality: The verticality defined in this application is not limited to an absolute vertical intersection relationship (an included angle is 90 degrees). It is allowed that a non-absolute vertical intersection relationship is caused by factors such as an assembly tolerance, a design tolerance, and a structural flatness, and an error within a small angle range is allowed. For example, an assembly error range of 80 degrees to 100 degrees may be understood as a vertical relationship.

An embodiment of this application provides a splitter, including a splitter body, a busbar component, and a plurality of branch line components. At least one of the busbar component and the plurality of branch line components is detachably connected to the splitter body, to facilitate installation and replacement of the splitter body. The busbar component includes a positive busbar and a negative busbar, and each branch line component includes a positive branch line and a negative branch line, so that the splitter has relatively high integration. One end of the positive busbar is electrically connected to one end of a positive branch line of each branch line component by using the splitter body, one end of the negative busbar is electrically connected to one end of a negative branch line of each branch line component by using the splitter body, the other end of the positive busbar and the other end of the negative busbar are configured to electrically connect to a power module, and the other end of the positive branch line and the other end of the negative branch line are configured to electrically connect to a load. The splitter provided in this application has the plurality of branch line components configured to electrically connect to a plurality of loads. This can reduce a quantity of external interfaces of the power module, and facilitates overall vehicle layout.

The splitter in this application may be applied to an in-vehicle power supply system. The in-vehicle power supply system includes a power module and a splitter. The power module is electrically connected to a plurality of loads or an external power supply by using the splitter. The in-vehicle power supply system may be applied to a vehicle, and the in-vehicle power supply system is configured to provide electric energy for each in-vehicle load in the vehicle.

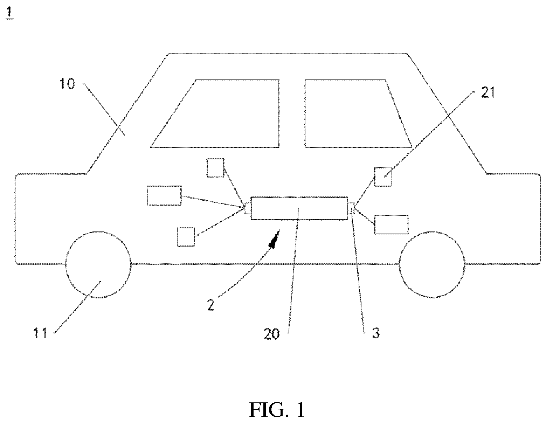

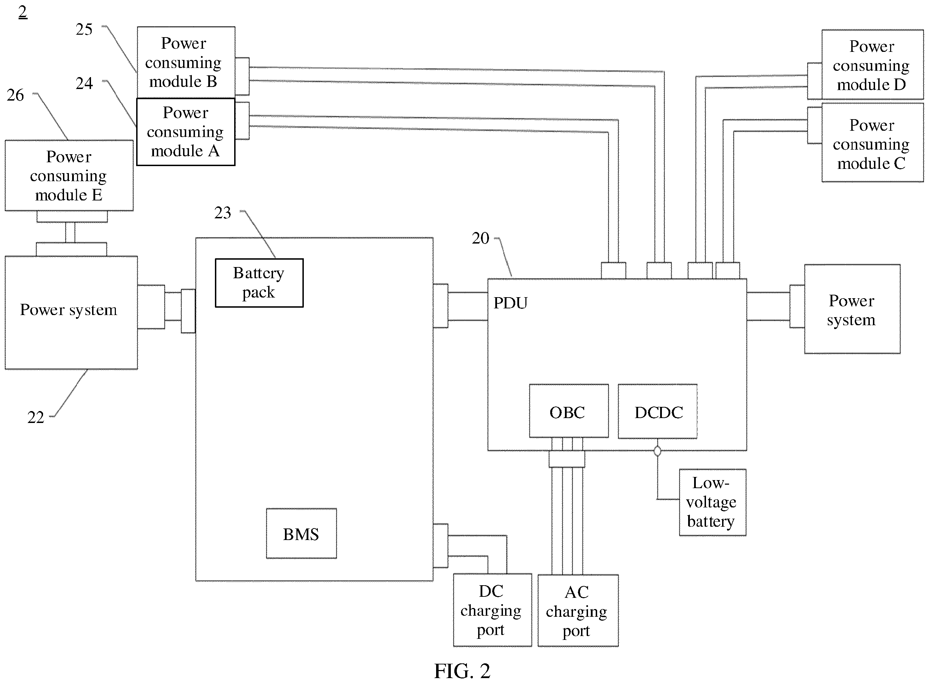

Refer to FIG. 1 and FIG. 2. FIG. 1 is a schematic diagram of a structure of a vehicle 1 according to an embodiment of this application. FIG. 2 is a schematic diagram of a structure of an in-vehicle power supply system 2 according to an embodiment of this application. In an implementation, the vehicle 1 includes a vehicle body 10 and the in-vehicle power supply system 2, and the in-vehicle power supply system 2 is installed on the vehicle body 10.

In this implementation, the vehicle 1 is a wheeled vehicle 1 that is driven or pulled by a power apparatus and that is used by a person travelling on a road or used to transport articles and perform a special engineering operation. The vehicle 1 includes an electric vehicle (Electric Vehicle, EV for short), a pure electric vehicle (Pure Electric Vehicle/Battery Electric Vehicle, PEVBEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), a new energy vehicle (New Energy Vehicle), or the like. In some implementations, the vehicle 1 includes a passenger vehicle, and various specialized vehicles with special functions, such as a project emergency vehicle, a sprinkler vehicle, a vacuum vehicle, a cement mixer, a crane, a medical vehicle, and the like. The vehicle 1 may alternatively be a robot that can travel. In one implementation, the vehicle 1 further includes a wheel 11, and the in-vehicle power supply system 2 can drive the wheel 11 to rotate. The vehicle 1 may have three or more than three wheels 11. This application imposes no limitation thereto.

Continue to refer to FIG. 1. In an implementation, the in-vehicle power supply system 2 includes a splitter 3, a plurality of loads 21, and a power module 20. The power module 20 is electrically connected to the plurality of loads 21 through the splitter 3, and the power module 20 supplies power to the plurality of loads 21 through the splitter 3. The power module 20 is configured to supply power to the splitter 3, and the power module 20 and an input end of the splitter 3 may be electrically connected directly or electrically connected indirectly by using another component. The power module 20 may be a power distribution unit or a battery pack. In this implementation, the power module 20 is a power distribution unit 20.

Continue to refer to FIG. 2. In an implementation, the plurality of loads 21 include at least two of a compressor 24, a battery heating system 25, a seat heating module 26, a power system 22, and a direct current low-voltage power supply.

In an implementation, the in-vehicle power supply system 2 further includes a battery pack 23, the splitter 3 is electrically connected to the battery pack 23 through the power distribution unit 20, and the plurality of loads 21 are in-vehicle loads.

In an implementation, a battery management system (Battery Management System, BMS) is disposed on the battery pack 23. The battery management system is closely combined with the battery pack 23, detects a voltage, a current, and a temperature of the battery pack 23 in real time by using a sensor, further performs leakage detection, heat management, battery balance management, and alarm reminding, calculates a remaining capacity (SOC) and discharge power, reports a battery degradation degree (SOH) and a remaining capacity (SOC) status, controls maximum output power based on the voltage, current, and temperature of the battery by using an algorithm to obtain a maximum driving mileage, controls a charger to perform charging with an optimal current by using an algorithm, and communicates with an in-vehicle general controller, a motor control unit, an energy control system, an in-vehicle display system, and the like in real time through a bus interface.

The power distribution unit 20 is also referred to as a power distribution box, and is referred to as a PDU (Power Distribution Unit) for short in English. The battery pack 23 transmits a high-voltage direct current to the power distribution unit 20, and the power distribution unit 20 converts the high-voltage direct current output by the battery pack 23 into a direct current voltage or an alternating current required by each load during working, so as to supply power to the load. Direct current voltages required by different loads include a high-voltage direct current and a low-voltage direct current. The high-voltage direct current is transmitted to a high-voltage load to supply power to the high-voltage load. For example, the high-voltage load includes the compressor 24, the battery heating system 25, the seat heating module 26, the power system 22, and the like. The power system 22 includes a drive motor and a motor control unit (MCU, Motor Control Unit). A low-voltage direct current power supply is electrically connected to a low-voltage load, and supplies power to the low-voltage load. For example, the low-voltage load includes a dashboard, a control display screen, a vehicle light, a USB interface, and the like.

The compressor 24 is a component in an in-vehicle air conditioning system, and is used for cooling or heating. In an implementation, the load further includes a water pump in the in-vehicle air conditioning system or a water pump in an in-vehicle cooling system. The in-vehicle cooling system is used to cool heating components such as a circuit board and a drive motor in the vehicle.

The battery heating system 25 is configured to heat the battery pack 23, and the battery pack 23 is configured to supply power to the drive motor, so that the drive motor drives the wheels 11 to travel. Charging the battery pack 23 at a low temperature may damage the battery pack 23, and the battery pack 23 can be charged only after the battery heating system 25 heats the battery pack 23 to raise the temperature, so as to avoid damage to the battery pack 23 during charging at a low temperature.

The seat heating module 26 is configured to heat a seat, including a front seat, a rear seat, or a middle seat. In some embodiments, when the vehicle 1 is a caravan, the seat heating module 26 may heat a seat or a lying seat in the caravan.

The low-voltage direct current power supply includes a 12 V direct current voltage power supply, which is used to charge small components, such as the dashboard, the control display screen, the car light, and the USB interface.

In an implementation, the in-vehicle power supply system 2 may alternatively be charged by using an external power supply, and electric energy is stored in the in-vehicle power supply system 2. When power needs to be supplied to a load, the stored electric energy is released to supply power to the load.

In an implementation, an on-board charger (OBC, On-board charger) and a DCDC module are disposed in the power distribution unit 20. The on-board charger is a function module configured to charge the high-voltage battery pack 23 from an alternating current power grid when the vehicle is parked. The DCDC module is a function module configured to convert a high-voltage direct current into a direct current voltage required when the load works. For example, the DCDC module may supply power to a 12 V in-vehicle load.

The power system 22 is configured to provide power for the vehicle 1. The power system 22 includes the motor control unit and the drive motor. The in-vehicle power supply system 2 may supply power to the motor control unit and the drive motor. There may be one or more power systems 22.

The splitter 3 in embodiments of this application may be disposed between the power module 20 and the load 21 as required. For example, in FIG. 2, one splitter 3 is connected between the power distribution unit 20 and the compressor 24 as well as the battery heating system 25. The splitter 3 is connected to two loads at the same time, which can save space and simplify layout.

In the existing in-vehicle power supply system 2, if no splitter 3 is disposed, the power distribution unit 20 needs to supply power to different loads through independent connecting devices, which requires a large quantity of interfaces on the power distribution unit 20. This not only increases a size of the power distribution unit 20, but also increases a failure probability of an interface due to the large quantity of connecting devices.

However, in this application, the splitter 3 is applied to the in-vehicle power supply system 2, the splitter 3 is connected to the power distribution unit 20 and a plurality of loads 21, and the splitter 3 combines power supply ports of different loads into a single power supply output port, and then supplies power to the different loads. This can reduce a quantity of connecting devices between the power distribution unit 20 and the loads, and further reduce structural components on the power distribution unit 20, thereby facilitating overall vehicle layout.

The following describes in detail the splitter 3 provided in embodiments of this application.

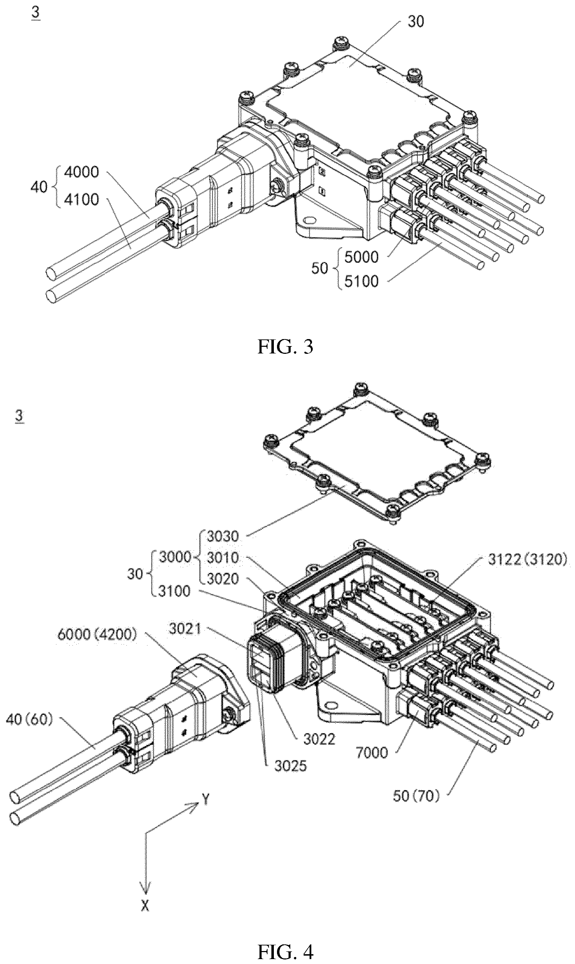

Refer to FIG. 3 and FIG. 4. FIG. 3 is a schematic diagram of a structure of a splitter 3 according to a first embodiment of this application. FIG. 4 is an exploded view of the splitter 3 according to the first embodiment of this application. In an implementation, the splitter 3 includes a splitter body 30, a busbar component 40, and a plurality of branch line components 50 (as shown in FIG. 3). At least one of the busbar component 40 and the plurality of branch line components 50 is detachably connected to the splitter body 30 (as shown in FIG. 4). The busbar component 40 includes a positive busbar 4000 and a negative busbar 4100 (as shown in FIG. 3), and each branch line component 50 includes a positive branch line 5000 and a negative branch line 5100 (as shown in FIG. 3). One end of the positive busbar 4000 is electrically connected to one end of the positive branch line 5000 of each branch line component 50 through the splitter body 30, one end of the negative busbar 4100 is electrically connected to one end of the negative branch line 5100 of each branch line component 50 through the splitter body 30, the other end of the positive busbar 4000 and the other end of the negative busbar 4100 are configured to be electrically connected to the power module 20, and the other end of the positive branch line 5000 and the other end of the negative branch line 5100 are configured to be electrically connected to the load 21.

In this implementation, one end of the busbar component 40 extends into the splitter body 30, one end of the positive busbar 4000 and one end of the negative busbar 4100 in the busbar component 40 are located in the splitter body 30, and the other end of the positive busbar 4000 and the other end of the negative busbar 4100 are electrically connected to the power module 20. The plurality of branch line components 50 extend from the inside of the splitter body 30 to the outside of the splitter body 30, one end of the positive branch line 5000 and one end of the negative branch line 5100 in the branch line component 50 are located in the splitter body 30 and are electrically connected to the positive busbar 4000 and the negative busbar 4100 respectively, and the other end of the positive branch line 5000 and the other end of the negative branch line 5100 are electrically connected to the load 21. A current flows out from a positive electrode of the power module 20, flows through the positive busbar 4000 and the plurality of positive branch lines 5000, flows into positive electrodes of the plurality of loads 21, then flows out from negative electrodes of the plurality of loads 21, and finally flows into a negative electrode of the power module 20 after flowing through the plurality of negative branch lines 5100 and the negative busbar 4100, to form a loop, so that the power module 20 supplies power to the plurality of loads 21 by using the splitter 3.

A quantity of branch line components 50 is 2 or a positive integer greater than 2. A person skilled in the art may adjust the quantity of branch line components 50 based on an actual requirement. This is not limited in this application. In the embodiment shown in FIG. 3, there are five branch line components 50, which can implement current splitting into five paths to supply power to five loads 21 simultaneously.

The splitter body 30 may be configured to protect the positive busbar 4000, the negative busbar 4100, the positive branch lines 5000, and the negative branch lines 5100 inside the splitter body 30, and isolate internal components of the splitter body 30 from an external environment. In addition, the splitter body 30 further provides space for connection structures and components required for implementing electrical connection between the positive busbar 4000 and the plurality of positive branch lines 5000 and between the negative busbar 4100 and the plurality of negative branch lines 5100.

In this implementation, at least one of the busbar component 40 and the plurality of branch line components 50 is detachably connected to the splitter body 30, and the remaining one is fixedly connected to the splitter body 30. For example, in the embodiment shown in FIG. 4, the detachable connection is a screw connection. There are two states between the splitter body 30 and the detachably connected part in the busbar component 40 and the plurality of branch line components 50: connected and separated. When the splitter 3 needs to be repaired or replaced, the detachable connection relationship helps reduce operation difficulty and costs. The fixedly connected part in the busbar component 40 and the plurality of branch line components 50 helps ensure stability of an overall structure of the splitter 3. When an external environment exerts an external force on the splitter 3, the fixed connection relationship can reduce impact caused by the external environment on the splitter 3.

In an implementation, both the busbar component 40 and the plurality of branch line components 50 are detachably connected to the splitter body 30. This implementation helps further improve convenience of maintenance or installation of the splitter 3.

In this application, the splitter 3 is disposed. First, the splitter 3 is located outside the power distribution unit 20, and does not occupy internal space of the power distribution unit 20, thereby reducing a size of the power distribution unit 20. When the power distribution unit 20 is applied to the vehicle 1, the reduced size of the power distribution unit 20 facilitates overall vehicle layout.

Second, one splitter 3 may split a current into a plurality of paths, and supply power to the plurality of loads 21 at the same time, so as to optimize conventional centralized power distribution to distributed power distribution, reduce a quantity of peripheral connecting devices of the power distribution unit 20, save costs, and facilitate a miniaturization design of the power distribution unit 20 and the splitter 3, so that the power distribution unit 20 and the splitter 3 can adapt to various small-sized scenarios.

Third, one splitter 3 relates to the positive busbar 4000, the negative busbar 4100, the plurality of positive branch lines 5000, and the plurality of negative branch lines 5100. The splitter 3 has high integration, and only one splitter 3 is required to form a loop between the power module 20 and the plurality of loads 21. Cable bundle layout is simple and convenient, and manufacturing costs of the splitter 3 and assembly difficulty of the in-vehicle power supply system 2 can be reduced.

Fourth, at least one of the busbar component 40 and the plurality of branch line components 50 is detachably connected to the splitter body 30, and when a fault occurs, the entire in-vehicle power supply system 2 does not need to be disassembled, thereby effectively reducing operation difficulty and costs of maintaining the splitter 3. In addition, during assembly, the splitter body 30 and the detachably connected cable component part may be separately installed. For example, the splitter body 30 may be first installed on the power distribution unit 20, and then the detachably connected cable component part is installed on the splitter body 30, so as to avoid an increase in installation difficulty due to too many cables and make installation more convenient.

Continue to refer to FIG. 4. In an implementation, a component that is in the busbar component 40 and the plurality of branch line components 50 and that is detachably connected to the splitter body 30 is a detachable cable component 60. The detachable cable component 60 further includes a cable connector 6000 and a cable fastened in the cable connector 6000. The splitter body 30 includes a housing 3000 and a conductive component 3100 located in the housing 3000. The cable connector 6000 is detachably connected to the housing 3000, and one end of the cable in the cable connector 6000 is configured to electrically connect to the conductive component 3100. When the cable connector 6000 is connected to the housing 3000, one end of the cable in the detachable cable component 60 is electrically connected to the conductive component 3100. When the cable connector 6000 is separated from the housing 3000, one end of the cable in the cable connector 6000 is disconnected from the conductive component 3100. In this implementation, the conductive component 3100 in the housing 3000 implements electrical connections between the positive busbar 4000 and the positive branch line 5000, and between the negative busbar 4100 and the negative branch line 5100.

In this implementation, one end of the cable in the detachable cable component 60 extends into the housing 3000 from the cable connector 6000, and the detachable cable component 60 is detachably connected to the housing 3000 and electrically connected to the conductive component 3100 in the housing 3000 by using the cable connector 6000. A specific manner of detachable connection between the cable connector 6000 and the housing 3000 is not limited. For example, in the first embodiment shown in FIG. 4, the cable connector 6000 and the housing 3000 are detachably connected by using a screw and a screw hole.

In this implementation, a connection relationship between the cable connector 6000 and the housing 3000 is corresponding to an electrical connection relationship between the cable in the detachable cable component 60 and the conductive component 3100. Connection or separation between the cable connector 6000 and the housing 3000 enables the cable to be electrically connected to or disconnected from the conductive component 3100 quickly, thereby improving installation efficiency of the splitter 3.

Connection and separation between the cable connector 6000 and the housing 3000 are relative and interchangeable states. When the detachable cable component 60 or the conductive component 3100 that is electrically connected to the detachable cable component 60 and that is inside the splitter 3 needs to be replaced, the cable connector 6000 and the housing 3000 may be quickly disassembled for maintenance, so that it is more convenient to replace a component when a fault occurs.

In an implementation, a component that is in the busbar component 40 and the plurality of branch line components 50 and that is fixedly connected to the splitter body 30 is a fixed cable component 70. The fixed cable component 70 further includes a fixed connector 7000, the fixed connector 7000 and the housing 3000 of the splitter body 30 are integrally formed, and one end of a cable in the fixed cable component 70 is fastened in the fixed connector 7000. The cable in the fixed cable component 70 is fixedly connected to the housing 3000 and electrically connected to the conductive component 3100 in the housing 3000 by using the fixed connector 7000.

Continue to refer to FIG. 4. In an implementation, the housing 3000 includes a housing body 3010 and a cable connection base 3020 located on an outer side of the housing body 3010. The cable connector 6000 is detachably connected to the cable connection base 3020. When the cable connector 6000 is connected to the cable connection base 3020, one end of the cable in the cable connector 6000 is electrically connected to the conductive component 3100 by using the cable connection base 3020.

In this implementation, the cable connector 6000 is detachably connected to the cable connection base 3020. A connection relationship between the cable connector 6000 and the cable connection base 3020 is corresponding to an electrical connection relationship between the cable in the detachable cable component 60 and the conductive component 3100. Connection or separation between the cable connector 6000 and the cable connection base 3020 enables the cable to be electrically connected to or disconnected from the conductive component 3100 quickly, thereby improving installation efficiency of the splitter 3.

When the cable connector 6000 and the cable connection base 3020 are in a connected state, the cable connector 6000 and the cable connection base 3020 are relatively fixed to form a whole. In this case, the cable in the detachable cable component 60 is electrically connected to the conductive component 3100 of the splitter body 30. When the cable connector 6000 and the cable connection base 3020 are in a disassembled state, the cable connector 6000 is separated from the cable connection base 3020. In this case, the electrical connection between the cable in the detachable cable component 60 and the conductive component 3100 of the splitter body 30 is disconnected.

A specific manner of detachable connection between the cable connector 6000 and the cable connection base 3020 is not limited. For example, in the embodiment shown in FIG. 4, the cable connector 6000 and the cable connection base 3020 are detachably connected by using a screw and a screw hole.

In this implementation, shapes of two opposite end faces of the cable connector 6000 and the cable connection base 3020 match, which helps improve structural stability when the cable connector 6000 and the cable connection base 3020 are in a connected state.

In an implementation, the cable connection base 3020 includes a first mounting groove 3021 and a second mounting groove 3022. The cable connection base 3020 is fastened to an outer side of the housing body 3010, and the first mounting groove 3021 and the second mounting groove 3022 are arranged in a stacked manner along the outer side of the housing body 3010. Continue to refer to FIG. 3 and FIG. 4. The detachable cable component 60 is the busbar component 40, the cable connector 6000 is a busbar connector 4200, and the busbar connector 4200 includes one end of the positive busbar 4000 and one end of the negative busbar 4100. Correspondingly, the positive busbar 4000 and the negative busbar 4100 are electrically connected to the conductive component 3100 by using the first mounting groove 3021 and the second mounting groove 3022 respectively. For example, one end of the positive busbar 4000 in the busbar connector 4200 is electrically connected to the conductive component 3100 by using the first mounting groove 3021, and one end of the negative busbar 4100 in the busbar connector 4200 is electrically connected to the conductive component 3100 by using the second mounting groove 3022. Correspondingly, one end of the positive busbar 4000 and one end of the negative busbar 4100 in the busbar connector 4200 are arranged along a stacking direction of the first mounting groove 3021 and the second mounting groove 3022.

Continue to refer to FIG. 4. In an implementation of the first embodiment of this application, the detachable cable component 60 is the busbar component 40, the cable connector 6000 is the busbar connector 4200, and one end of the cable in the detachable cable component 60 is one end of the positive busbar 4000 and one end of the negative busbar 4100.

When the busbar connector 4200 and the cable connection base 3020 are in a connected state, the busbar connector 4200 and the cable connection base 3020 are relatively fixed to form a whole. In this case, the positive busbar 4000 and the negative busbar 4100 are electrically connected to the conductive component 3100 of the splitter body 30. When the busbar connector 4200 and the cable connection base 3020 are in a disassembled state, the busbar connector 4200 is separated from the cable connection base 3020. In this case, electrical connections between the positive busbar 4000 and the conductive component 3100 of the splitter body 30 and between the negative busbar 4100 and the conductive component 3100 are disconnected.

A specific manner of detachable connection between the busbar connector 4200 and the cable connection base 3020 is not limited. For example, in the first embodiment shown in FIG. 4, the busbar connector 4200 and the cable connection base 3020 are detachably connected by using a screw and a screw hole.

In this implementation, shapes of two opposite end faces of the busbar connector 4200 and the cable connection base 3020 match, which helps improve structural stability when the busbar connector 4200 is connected to the cable connection base 3020.

Continue to refer to FIG. 4. In an implementation, an arrangement direction of a positive branch line 5000 and a negative branch line 5100 in at least one of the plurality of branch line components 50 is the same as an arrangement direction of the positive busbar 4000 and the negative busbar 4100. All positive branch lines 5000 in the plurality of branch line components 50 are disposed side by side, and an arrangement direction of the positive branch lines 5000 is perpendicular to the arrangement direction of the positive busbar 4000 and the negative busbar 4100. In the embodiment shown in FIG. 4, the arrangement direction of the positive busbar 4000 and the negative busbar 4100 is a first direction X, the arrangement direction of all the positive branch lines 5000 in the plurality of branch line components 50 is a second direction Y, and the first direction X and the second direction Y are perpendicularly intersected. In an implementation, an arrangement direction of all negative branch lines 5100 in the plurality of branch line components 50 is also the second direction Y.

In this embodiment, an arrangement direction of the positive branch lines 5000 and the negative branch lines 5100 in all the branch line components 50 is the first direction X, and all the positive branch lines 5000 and all the negative branch lines 5100 in the plurality of branch line components 50 are arranged in two rows. In this implementation, the arrangement direction of all the positive branch lines 5000 and all the negative branch lines 5100 is the same as the arrangement direction of the positive busbar 4000 and the negative busbar 4100, that is, an arrangement direction of a positive branch line 5000 and a negative branch line 5100 in each branch line component 50 is the same as the arrangement direction of the positive busbar 4000 and the negative busbar 4100, so that the positive busbar 4000 is more conveniently electrically connected to the positive branch line 5000, and the negative busbar 4100 is more conveniently electrically connected to the negative branch line 5100. In this way, external cables of the splitter 3 are arranged in a more regular and orderly manner.

In an implementation, the first direction X is a height direction of the splitter body 30, and the second direction Y is a length direction or a width direction of the splitter body 30. In the embodiments shown in FIG. 3 and FIG. 4, the splitter body 30 is approximately in a shape of a cuboid.

In an implementation, when the splitter body 30 is in an irregular shape or another shape, the first direction X is a height direction of the splitter body 30, and the second direction Y may be set based on the shape of the splitter body 30, but is perpendicular to the first direction X.

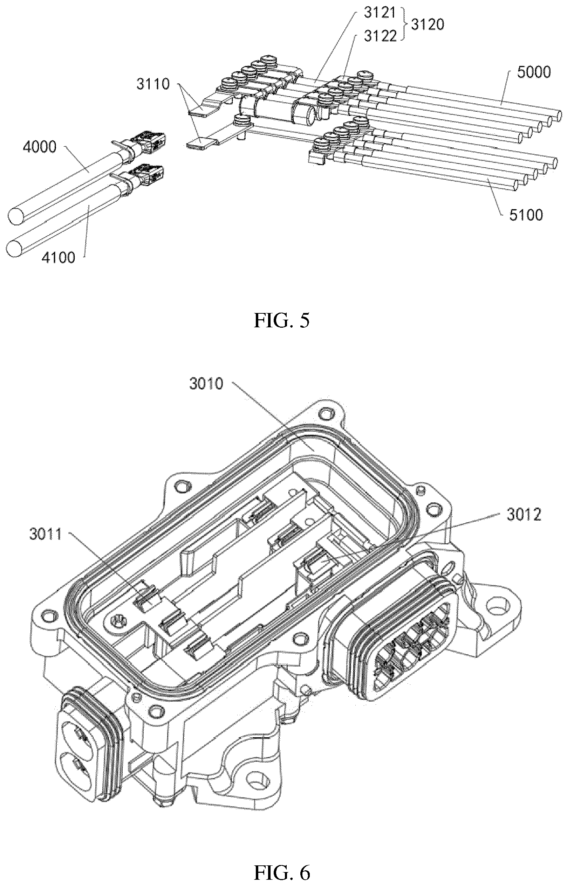

FIG. 5 is a schematic diagram of a partial structure of the splitter 3 according to the first embodiment of this application. Refer to FIG. 4. The housing 3000 includes the housing body 3010 and a cover 3030. The space enclosed by the housing body 3010 and the cover 3030 is used to accommodate the conductive component 3100. Refer to FIG. 5. The conductive component 3100 includes two conductive terminals 3110 and a plurality of fuses 3120. Refer to FIG. 4 and FIG. 5. The two conductive terminals 3110 and the plurality of fuses 3120 are located in the space enclosed by the housing body 3010 and the cover 3030.

In an embodiment, the two conductive terminals 3110 are arranged in a stacked manner in the space enclosed by the housing body 3010 and the cover 3030. Refer to FIG. 4 and FIG. 5. The first mounting groove 3021 and the second mounting groove 3022 of the cable connection base 3020 are arranged in a stacked manner along an outer side of the housing body 3010. A stacking direction of the two conductive terminals 3110 is the same as a stacking direction of the first mounting groove 3021 and the second mounting groove 3022. For example, along the stacking direction of the two conductive terminals 3110, one conductive terminal 3110 is arranged above the other conductive terminal 3110. One conductive terminal 3110 is configured to connect to one end of the positive busbar 4000 by using the first mounting groove 3021 of the cable connection base 3020, and the other conductive terminal 3110 is configured to connect to one end of the negative busbar 4100 by using the second mounting groove 3022 of the cable connection base 3020. In this implementation, one end of the conductive terminal 3110 extends from the housing body 3010 to the cable connection base 3020, and the other end of the conductive terminal 3110 is electrically connected to the fuse 3120.

In this implementation, the stacking direction of the two conductive terminals 3110 and the stacking direction of the first mounting groove 3021 and the second mounting groove 3022 are all the first direction X.

In an implementation, the plurality of fuses 3120 are disposed in a one-to-one correspondence with the positive branch lines 5000 (as shown in FIG. 5), one end of the plurality of fuses 3120 is electrically connected to the positive busbar 4000 (as shown in FIG. 5), and the other end of one fuse 3120 is electrically connected to one positive branch line 5000 (as shown in FIG. 5).

In this implementation, the housing body 3010 and the cover 3030 are detachably connected, and the fuses 3120 are disposed in the space enclosed by the housing body 3010 and the cover 3030. When a fuse 3120 needs to be replaced, the housing body 3010 and the cover 3030 may be quickly disassembled, so that the fuse 3120 is more convenient to be replaced when an overcurrent fault occurs. A quantity of fuses 3120 is equal to the quantity of positive branch lines 5000, so that the fuses 3120 perform overcurrent protection on both the busbar component 40 and each branch line component 50.

In an implementation, the plurality of fuses 3120 are alternatively disposed in a one-to-one correspondence with the negative branch lines 5100. One end of the plurality of fuses 3120 is electrically connected to the positive busbar 4000 and the negative busbar 4100, and the other end of the plurality of fuses 3120 is electrically connected to the positive branch lines 5000 and the negative branch lines 5100. This solution helps enhance overcurrent protection for the splitter 3.

In the implementations shown in FIG. 4 and FIG. 5, the fuse 3120 is fastened in the housing body 3010 by using a screw, and two ends of the fuse 3120 are electrically connected to the positive busbar 4000 and the positive branch line 5000 respectively.

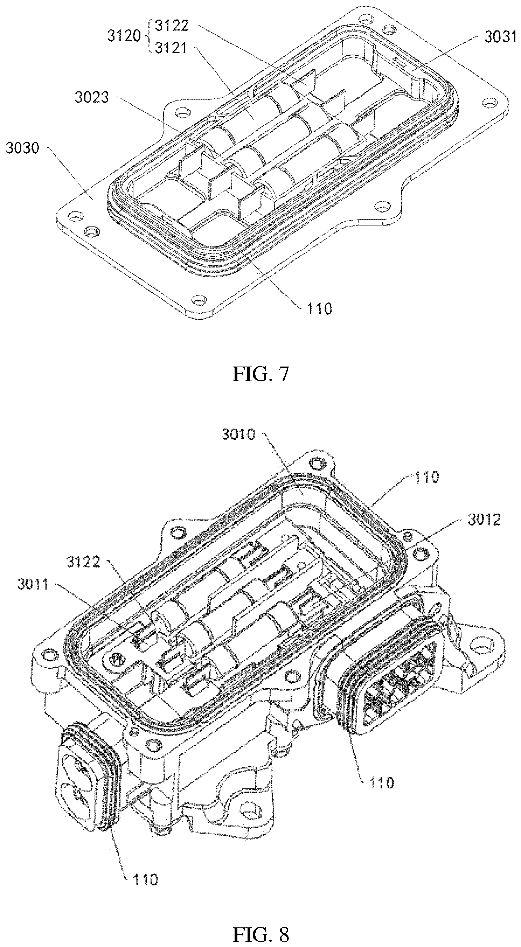

Refer to FIG. 6 to FIG. 8. FIG. 6 is a schematic diagram of a partial structure of the splitter 3 according to the first embodiment of this application. FIG. 7 is a schematic diagram of structures of the cover 3030 and the fuse 3120 in the splitter 3 according to the first embodiment of this application. FIG. 8 is a schematic diagram of a partial structure of the splitter 3 according to the first embodiment of this application. In an implementation of the first embodiment, a busbar plug structure 3011 and a branch line plug structure 3012 (as shown in FIG. 6) are disposed in the housing body 3010, the busbar plug structure 3011 is electrically connected to the positive busbar 4000, and the branch line plug structure 3012 is electrically connected to the positive branch line 5000. The fuse 3120 includes a fuse body 3121 and plug terminals 3122 (as shown in FIG. 7) located at two ends of the fuse body 3121. The fuse body 3121 is fastened on a side of the cover 3030 facing the housing body 3010 (as shown in FIG. 7). When the cover 3030 and the housing body 3010 are assembled, the two plug terminals 3122 are respectively inserted into the busbar plug structure 3011 and the branch line plug structure 3012, and are electrically connected to the busbar plug structure 3011 and the branch line plug structure 3012 respectively (as shown in FIG. 7 and FIG. 8).

In this implementation, the busbar plug structures 3011 and the branch line plug structures 3012 that are arranged in pairs are installed at and electrically connected to two ends of the fuse bodies 3121 in a one-to-one correspondence. The fuse 3120 is electrically connected between the positive busbar 4000 and the positive branch line 5000. When a current on the positive branch line 5000 exceeds a preset value or the positive branch line 5000 is short-circuited, heat generated by the fuse 3120 melts the fuse body 3121, so as to disconnect the circuit, thereby implementing circuit protection.

The fuse body 3121 may be made of materials such as copper, silver, zinc, aluminum, lead-tin alloy, and copper-silver alloy. These materials can fuse when a preset temperature is reached, so that the fuse 3120 has an overcurrent protection function.

In this implementation, the fuse 3120 is fastened on the inner side of the cover 3030 in advance, and the busbar plug structure 3011 and the branch line plug structure 3012 are disposed in the housing body 3010. When the fuse 3120 is fastened inside the splitter 3, the cover 3030 and the housing body 3010 are assembled and fastened, so that the plug terminals 3122 at two ends of the fuse body 3121 are inserted into the busbar plug structure 3011 and the branch line plug structure 3012 inside the housing body 3010. In this way, the fuse 3120 can be quickly installed in the splitter 3, so that installation is more convenient.

In an implementation, the fuse body 3121 and the cover 3030 may be elastically connected by using a slot 3023 (as shown in FIG. 7), and the cover 3030 and the housing body 3010 may be connected by using a screw.

In an implementation, the busbar plug structure 3011 and the branch line plug structure 3012 are electrically connected to the busbar component 40 and the plurality of branch line components 50 respectively, to implement electrical connections between the fuses 3120 and the busbar component 40 and between the fuses 3120 and the plurality of branch line components 50.

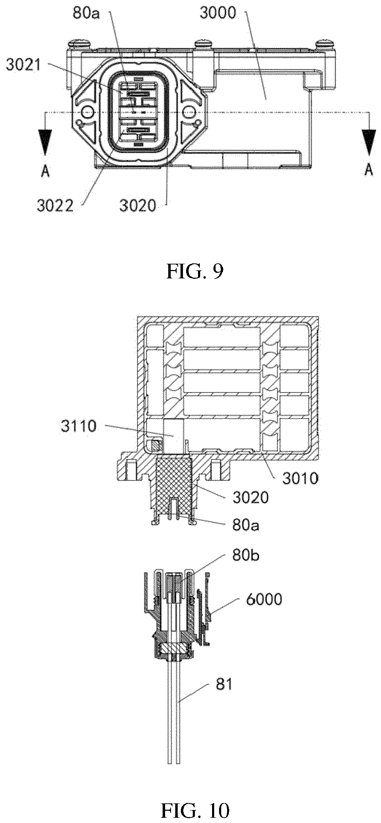

Refer to FIG. 9 and FIG. 10. FIG. 9 is a schematic diagram of a structure of the splitter 3 according to the first embodiment of this application. FIG. 10 is a sectional view of the splitter 3 shown in FIG. 9 along AA. In an implementation of the first embodiment, the splitter 3 further includes a first interlock terminal 80a and a second interlock terminal 80b (as shown in FIG. 10). The first interlock terminal 80a is located in the housing 3000 (as shown in FIG. 9), the second interlock terminal 80b is located in the cable connector 6000 (as shown in FIG. 10), one end of the second interlock terminal 80b is configured to electrically connect to the first interlock terminal 80a, and the other end of the second interlock terminal 80b is configured to electrically connect to a control module. When the cable connector 6000 is connected to the housing 3000, one end of the second interlock terminal 80b is electrically connected to the first interlock terminal 80a.

The following describes a working principle of the first interlock terminal 80a and the second interlock terminal 80b by using an example in which the detachable cable component is the busbar component 40. When the cable connector 6000 is connected to the housing 3000, the positive busbar 4000 and the negative busbar 4100 are electrically connected to the conductive component 3100 by using the conductive terminal 3110. In this case, the first interlock terminal 80a in the housing 3000 is in contact with and electrically connected to the second interlock terminal 80b in the cable connector 6000, so that the first interlock terminal 80a is connected to the second interlock terminal 80b to form a loop. When the cable connector 6000 is disconnected from the housing 3000, the first interlock terminal 80a and the second interlock terminal 80b are also disconnected, and the loop is cut off. Because the second interlock terminal 80b is electrically connected to the control module, when the busbar component 40 is loose or disconnected, whether the positive busbar 4000 and the negative busbar 4100 are connected to the splitter body 30 completely and securely can be effectively determined by using a control signal of the control module, so as to ensure that fault processing is performed on the interlock disconnection in time, and implement security function control.

For a working principle of using the first interlock terminal 80a and the second interlock terminal 80b to monitor an electrical connection status of the branch line component 50, refer to the embodiment shown in FIG. 10. Details are not described herein again.

In this implementation, the conductive terminal 3110 is located in the housing body 3010 and extends into the cable connection base 3020, and the first interlock terminal 80a is located in the cable connection base 3020. In an implementation, two conductive terminals 3110 are disposed in the housing 3000, and the first interlock terminal 80a is located between the two conductive terminals 3110.

In an implementation, the second interlock terminal 80b is located between the positive busbar 4000 and the negative busbar 4100, the first mounting groove 3021 and the second mounting groove 3022 are disposed in the cable connection base 3020 at an interval, and the first interlock terminal 80a is located between the first mounting groove 3021 and the second mounting groove 3022. The positive busbar 4000 is electrically connected to one of the conductive terminals 3110 after passing through the first mounting groove 3021. The negative busbar 4100 is electrically connected to the other conductive terminal 3110 after passing through the second mounting groove 3022.

In an implementation, two spacers 3025 (as shown in FIG. 4) are disposed in the cable connection base 3020 at an interval, and the two spacers 3025 and an inner wall of the cable connection base 3020 form the first mounting groove 3021 and the second mounting groove 3022 (as shown in FIG. 9 or FIG. 4). The two conductive terminals 3110 respectively extend from the housing body 3010 to the first mounting groove 3021 and the second mounting groove 3022. The first interlock terminal 80a is located between the two spacers 3025.

In an implementation, when the cable connection base 3020 is a busbar connection base, the first mounting groove 3021 and the second mounting groove 3022 are respectively configured to place the positive busbar 4000 and the negative busbar 4100 in the busbar component 40, so that when the busbar connector 4200 is connected to the busbar connection base, the positive busbar 4000 and the negative busbar 4100 are electrically connected to the two conductive terminals 3110 respectively.

In an implementation, when the cable connection base 3020 is a branch line connection base, the first mounting groove 3021 and the second mounting groove 3022 are respectively configured to place the positive branch line 5000 and the negative branch line 5100 in the branch line component 50, so that when the branch line connector 5200 is connected to the branch line connection base, the positive branch line 5000 and the negative branch line 5100 are electrically connected to the two conductive terminals 3110 respectively.

In an implementation, the two conductive terminals 3110 each are in a blade shape (as shown in FIG. 5), and one end of each of the positive busbar 4000 and the negative busbar 4100 of the busbar component 40 is in a slot shape, so that the blade is inserted into the slot, and the two conductive terminals 3110 are electrically connected to the positive busbar 4000 and the negative busbar 4100.

In an implementation, at one end of the positive busbar 4000 and the negative busbar 4100 of the busbar component 40, the two conductive terminals 3110 are in a slot shape.

In an implementation, the positive branch line 5000 and the negative branch line 5100 of the branch line component 50 are in one of a blade shape and a slot shape, and the two conductive terminals 3110 are in the other of the blade shape and the slot shape.

In an implementation, the second interlock terminal 80b is electrically connected to the control module by using an interlock cable 81, and the interlock cable 81 is located between the positive busbar 4000 and the negative busbar 4100, or located between the positive branch line 5000 and the negative branch line 5100.

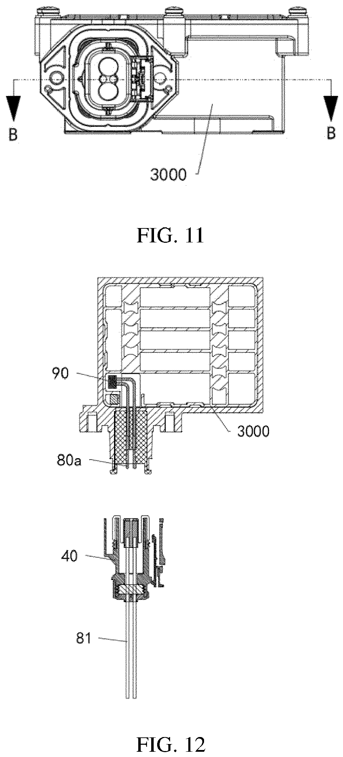

Refer to FIG. 11 and FIG. 12. FIG. 11 is a schematic diagram of a structure of the splitter 3 according to the first embodiment of this application. FIG. 12 is a sectional view of the splitter 3 shown in FIG. 11 along BB. In an implementation of the first embodiment, the splitter 3 further includes a temperature control element 90 (as shown in FIG. 12), the temperature control element 90 is located in the housing 3000 (as shown in FIG. 11 and FIG. 12), and the temperature control element 90 is electrically connected to the first interlock terminal 80a (as shown in FIG. 12), and is configured to monitor a temperature inside the splitter body 30.

In this implementation, the temperature control element 90 is a component whose electrical property (for example, resistance) changes with a temperature. For example, the temperature control element 90 may be a temperature sensor. The temperature control element 90 is connected to an interlock loop in which the first interlock terminal 80a is located. When a temperature in the housing 3000 changes, the resistance of the temperature control element 90 changes accordingly, so that a current in the interlock loop changes, and a temperature condition inside the housing 3000 may be correspondingly obtained by monitoring the current in the interlock loop.

In this implementation, the temperature control element 90 is disposed on a side that is in the housing 3000 and that is close to the busbar component 40, so that the temperature control element 90 monitors a temperature near the busbar component 40 more accurately and effectively.

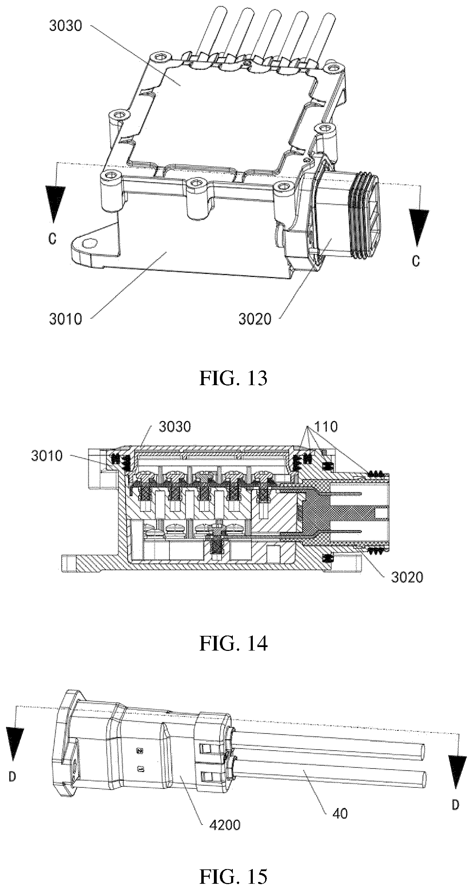

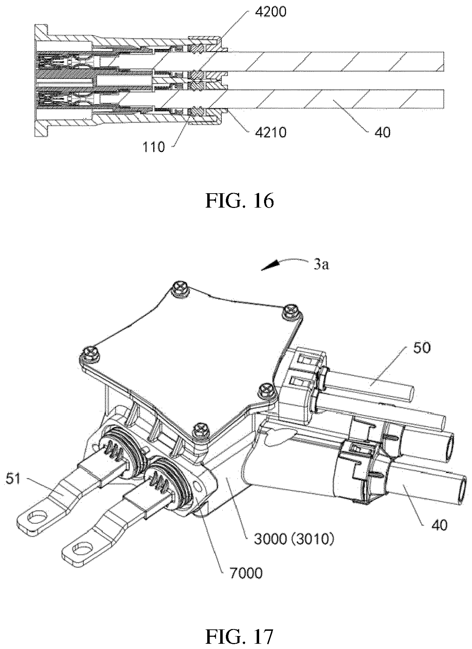

Return to the first embodiment. Refer to FIG. 13 to FIG. 16. FIG. 13 is a schematic diagram of a partial structure of the splitter 3 according to the first embodiment of this application. FIG. 14 is a sectional view of the splitter 3 shown in FIG. 13 along CC. FIG. 15 is a schematic diagram of a partial structure of the splitter 3 according to the first embodiment of this application. FIG. 16 is a sectional view of the splitter 3 shown in FIG. 15 along DD.

In an implementation of the first embodiment, a plurality of sealing rings 110 (as shown in FIG. 13 to FIG. 16) are disposed inside the splitter 3, and the plurality of sealing rings 110 form multi-level sealing, to isolate internal space of the splitter 3 from an external environment, so as to prevent water vapor from entering the splitter 3 and causing damage to internal components.

In this implementation, a boss 3031 (as shown in FIG. 7) is disposed on a surface that is of the cover 3030 and that faces the housing body 3010, and sealing rings 110 are disposed on a periphery of the boss 3031 and a periphery of an end face that is of the housing body 3010 and that faces the cover 3030 (as shown in FIG. 7 and FIG. 14). Sealing rings 110 are disposed in a circumferential direction on both a side that is of the cable connection base 3020 and that is close to the cable connector 6000 and a side that is of the cable connection base 3020 and that is away from the cable connector 6000 (as shown in FIG. 14). The busbar connector 4200 is provided with a busbar threading hole 4210 (as shown in FIG. 15), the busbar component 40 enters the busbar connector 4200 through the busbar threading hole 4210 (as shown in FIG. 16), and a sealing ring 110 is disposed on an inner side that is of the busbar connector 4200 and that is close to the busbar threading hole 4210 (as shown in FIG. 16). A branch line threading hole (not shown in the figure) is disposed on the branch line connector 5200. The branch line component 50 enters the branch line connector 5200 through the branch line threading hole. A sealing ring 110 is disposed on an inner side that is of the branch line connector 5200 and that is close to the branch line threading hole 5210.

FIG. 17 is a schematic diagram of a structure of a splitter 3a according to a second embodiment of this application. In an implementation of the second embodiment, one of a plurality of branch line components 50 is a copper sheet branch line component. For the copper sheet branch line component, both a positive branch line 5000 and a negative branch line 5100 are copper sheets 51, and the copper sheets 51 are fixedly connected to a splitter body 30.

The copper sheet may also be referred to as a copper bar. One end of the copper sheet is inserted into a fixed connector 7000 that is integrally formed with a housing 3000, and the other end of the copper sheet is inserted into a load, and is fixedly connected to the load by using a screw.

In this implementation, one of the plurality of branch line components 50 is a copper sheet, a busbar component 40 and remaining branch line components 50 are cables, and the busbar component 40 and the remaining branch line components 50 are flexible. In one aspect, one end of the busbar component 40 that is away from the splitter body 30 may extend to a position of the power module 20 based on a requirement. In another aspect, one end of the remaining branch line components 50 that is away from the splitter body 30 may extend to a load position of the vehicle 1 based on a requirement. This improves flexibility of overall cabling.

In this implementation, both a positive branch line 5000 and a negative branch line 5100 in the copper bar branch line component are fixedly connected to the splitter body 30, and at least one of the busbar component 40 and the remaining branch line components 50 is detachably connected to the splitter body 30. In an implementation, the busbar component 40 and each branch line component 50 except the copper sheet branch line component 50 are detachably connected to the splitter body 30.

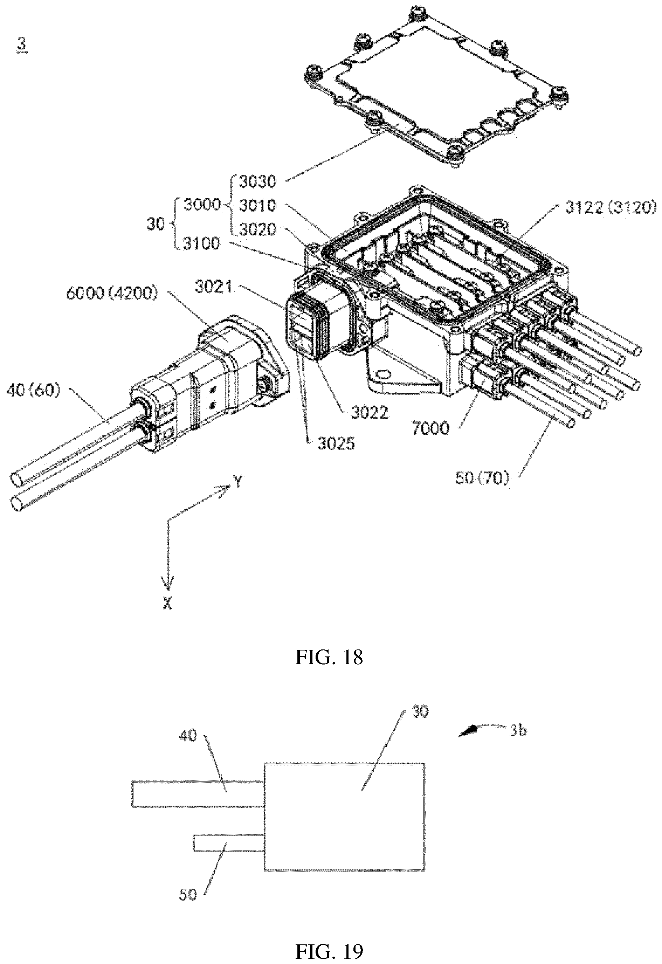

FIG. 18 is a schematic diagram of a partial structure of the splitter 3a according to the second embodiment of this application. In an implementation of the second embodiment, the splitter 3a further includes a micro switch 100. The housing 3000 includes a housing body 3010 and a cover 3030, the micro switch 100 is located in the housing body 3010, and the micro switch 100 is located between the cover 3030 and an insulation support part in the housing body 3010. A base 101 of the micro switch 100 is fastened to the insulation support part, and a spring 102 of the micro switch 100 elastically abuts against the cover 3030. The micro switch 100 is configured to monitor a disassembling and disassembling status of the cover 3030.

In this implementation, when the cover 3030 and the housing body 3010 are assembled, the cover 3030 applies a specific elastic force to the micro switch 100, and the micro switch 100 is connected to a loop inside the housing body 3010. When the cover 3030 is separated from the housing body 3010, the micro switch 100 is no longer subject to an action force exerted by the cover 3030, and the micro switch 100 is disconnected from the loop, so as to release a control signal and perform a high-voltage power-off operation. The micro switch 100 is disposed in the splitter 3a, which helps monitor whether the connection between the cover 3030 and the housing body 3010 is loose or completely separated, and ensures prompt troubleshooting for disconnection of the cover 3030, thereby implementing security function control.

In an implementation, the insulation support part may be a part of an insulator of the housing 3000 that is used to isolate the conductive component 3100 from the housing 3000, or a protruding part additionally disposed in the housing, and is used to support and fasten the micro switch 100, so as to prevent the micro switch 100 from shaking in the splitter 3, and improve monitoring accuracy of the micro switch 100.

In some implementations, the micro switch 100 is not limited to the structure form shown in FIG. 18.

FIG. 19 is a schematic diagram of a structure of a splitter 3b according to a third embodiment of this application. In an implementation, a busbar component 40 and at least one of a plurality of branch line components 50 are located on a same side of a splitter body 30.

In this implementation, an included angle between the busbar component 40 and the plurality of branch line components 50 is not limited, and may be any angle between 0° and 360°, so that the splitter 3b adapts to requirements of different installation scenarios. In this solution, the busbar component 40 and at least one of the plurality of branch line components 50 are disposed on the same side of the splitter body 30, which helps improve space utilization of one side of the splitter body 30. In an implementation, the busbar component 40 and each of the plurality of branch line components 50 are located on a same side of the splitter body 30. This solution helps to provide installation space for disposing more interfaces on other sides of the splitter body 30.

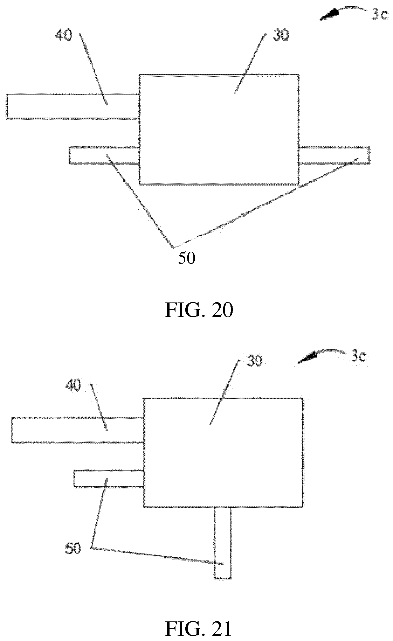

Refer to FIG. 20 and FIG. 21. FIG. 20 is a schematic diagram of a structure of a splitter 3c according to a fourth embodiment of this application. FIG. 21 is a schematic diagram of a structure of the splitter 3c according to the fourth embodiment of this application. In an implementation, a busbar component 40 and at least one of a plurality of branch line components 50 are located on different sides of a splitter body 30 (as shown in FIG. 20 and FIG. 21).

In this implementation, for example, the busbar component 40 and the at least one branch line component 50 may be disposed on two opposite sides of the splitter body 30 (as shown in FIG. 20), or may be disposed on two adjacent sides of the splitter body 30 (as shown in FIG. 21), so that there is a spatial spacing between the busbar component 40 and the at least one branch line component 50, thereby avoiding mutual interference between the busbar component 40 and the branch line component 50 and reducing a wiring error. In an implementation, the busbar component 40 and each of the plurality of branch line components 50 are located on different sides of the splitter body 30.

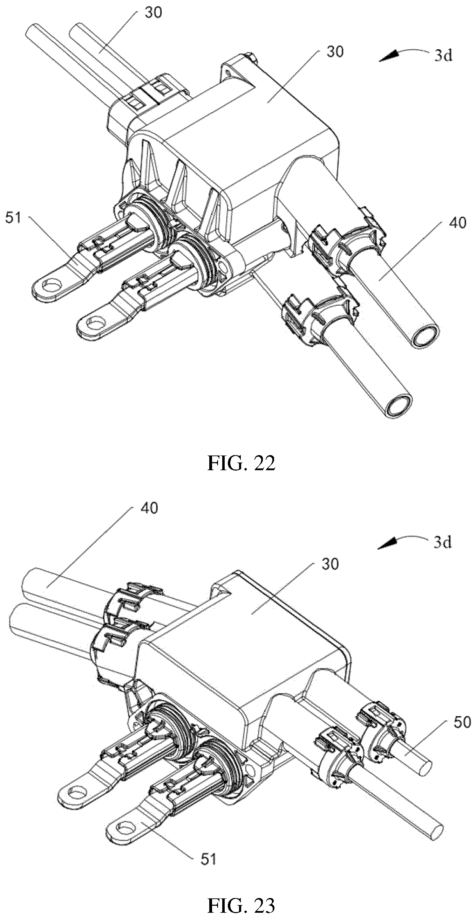

Refer to FIG. 22 and FIG. 23. FIG. 22 is a schematic diagram of a structure of a splitter 3d according to a fifth embodiment of this application. FIG. 23 is a schematic diagram of a structure of the splitter 3d according to the fifth embodiment of this application. In an implementation, two of a plurality of branch line components 50 are located on different sides of a splitter body 30 (as shown in FIG. 22 and FIG. 23).

In this implementation, one of the two branch line components 50 may be a copper bar branch line component. When two of the plurality of branch line components 50 are located on different sides of the splitter body 30, cabling of the two branch line components 50 does not interfere with each other, and electrical interference caused to each other is reduced. In this case, the busbar component 40 and one of the branch line components 50 may be located on a same side of the splitter body 30, or the busbar component 40 and each of the two branch line components 50 are located on different sides of the splitter body 30.

In an implementation, a housing 3000 of the splitter 3d is made of a metal material; or the housing 3000 of the splitter 3d is made of a plastic material, and a metal shield layer is disposed inside the splitter 3d. In this implementation, the housing 3000 of the metal material or the metal shield layer helps reduce impact of the busbar component 40 and the plurality of branch line components 50 on another device during power transmission.

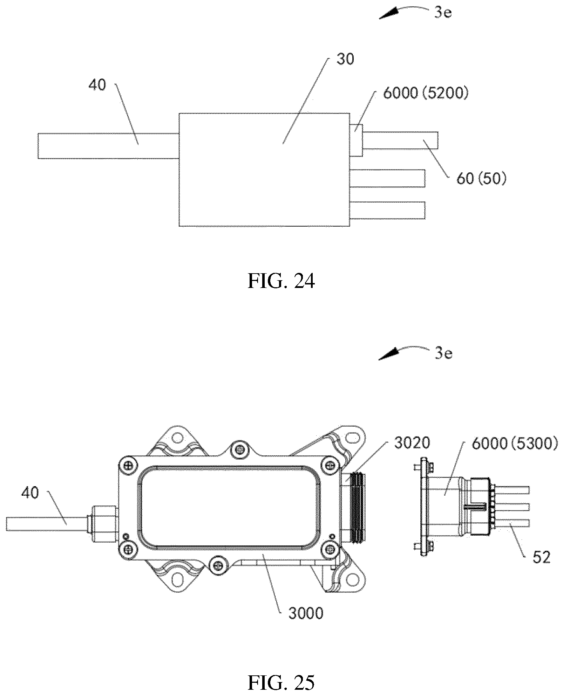

FIG. 24 is a schematic diagram of a structure of a splitter 3e according to a sixth embodiment of this application. The sixth embodiment of this application provides the splitter 3e. Differences from the first embodiment lie in that the detachable cable component 60 is a branch line component 50, the cable connector 6000 is a branch line connector 5200, and one end of a cable in the detachable cable component 60 is one end of a positive branch line 5000 and a negative branch line 5100.

In this implementation, the branch line connector 5200 is detachably connected to a cable connection base 3020. A connection relationship between the branch line connector 5200 and the cable connection base 3020 is corresponding to an electrical connection relationship between the conductive component 3100 and the positive branch line 5000 as well as the negative branch line 5100. Connection or separation of the branch line connector 5200 and the cable connection base 3020 enables the positive branch line 5000 and the negative branch line 5100 to be electrically connected to or disconnected from the conductive component 3100 quickly.

When the branch line connector 5200 and the cable connection base 3020 are in a connected state, the branch line connector 5200 and the cable connection base 3020 are relatively fixed to form a whole. In this case, the positive branch line 5000 and the negative branch line 5100 are electrically connected to the conductive component 3100 of the splitter body 30. When the branch line connector 5200 and the cable connection base 3020 are in a disassembled state, the branch line connector 5200 is separated from the cable connection base 3020. In this case, electrical connections between the positive branch line 5000 and the conductive component 3100 of the splitter body 30 and between the negative branch line 5100 and the conductive component 3100 are disconnected. Shapes of two opposite end faces of the branch line connector 5200 and the cable connection base 3020 match, which helps improve structural stability when the branch line connector 5200 is in a connected state with the cable connection base 3020.

A specific manner of detachable connection between the branch line connector 5200 and the cable connection base 3020 is not limited. For example, in the second embodiment shown in FIG. X, the branch line connector 5200 and the cable connection base 3020 are detachably connected by using a screw and a screw hole.

FIG. 25 is a schematic diagram of a structure of the splitter 3e according to the sixth embodiment of this application. In an implementation, the detachable cable component 60 is a branch line combination 52 formed by a plurality of branch line components 50 together, and the branch line combination 52 is detachably connected to the splitter body 30.

In this implementation, the branch line combination 52 is detachably connected to a housing 3000 by using the cable connector 6000, and is electrically connected to the conductive component 3100 in the housing 3000.

Connection and separation between the cable connector 6000 and the housing 3000 are relative and interchangeable states. When the branch line combination 52 or the conductive component 3100 that is electrically connected to the branch line combination 52 and that is inside the splitter 3 needs to be replaced, the cable connector 6000 and the housing 3000 may be quickly disassembled for maintenance, so that it is more convenient to replace a component when a fault occurs.

Continue to refer to FIG. 25. In an implementation, the cable connector 6000 is a branch line combination connector 5300, one end of each positive branch line 5000 and one end of each negative branch line 5100 in the branch line combination 52 are both fastened in the branch line combination connector 5300, and the branch line combination connector 5300 is detachably connected to the housing 3000. One end of each positive branch line 5000 and one end of each negative branch line 5100 in the branch line combination 52 are configured to electrically connect to the conductive component 3100. When the branch line combination connector 5300 is connected to the housing 3000, one end of each positive branch line 5000 and one end of each negative branch line 5100 in the branch line combination 52 are electrically connected to the conductive component 3100. When the branch line connector 5200 is separated from the housing 3000, one end of each positive branch line 5000 and one end of each negative branch line 5100 in the branch line combination 52 are disconnected from the conductive component 3100.

In this implementation, the branch line combination connector 5300 is detachably connected to the cable connection base 3020 of the housing 3000. When the branch line combination connector 5300 is connected to the cable connection base 3020, the branch line combination connector 5300 and the cable connection base 3020 are relatively fastened to form a whole. In this case, the positive branch line 5000 and the negative branch line 5100 are electrically connected to the conductive component 3100 of the splitter body 30. When the branch line combination connector 5300 and the cable connection base 3020 are in a disassembled state, the branch line combination connector 5300 is separated from the cable connection base 3020. In this case, electrical connections between the positive branch line 5000 and the conductive component 3100 of the splitter body 30 and between the negative branch line 5100 and the conductive component 3100 are disconnected. Shapes of two opposite end faces of the branch line combination connector 5300 and the cable connection base 3020 match, which helps improve structural stability when the branch line combination connector 5300 is in a connected state with the cable connection base 3020.

A specific manner of detachable connection between the branch line combination connector 5300 and the cable connection base 3020 is not limited. For example, in the second embodiment shown in FIG. 25, the branch line combination connector 5300 and the cable connection base 3020 are detachably connected by using a screw and a screw hole.

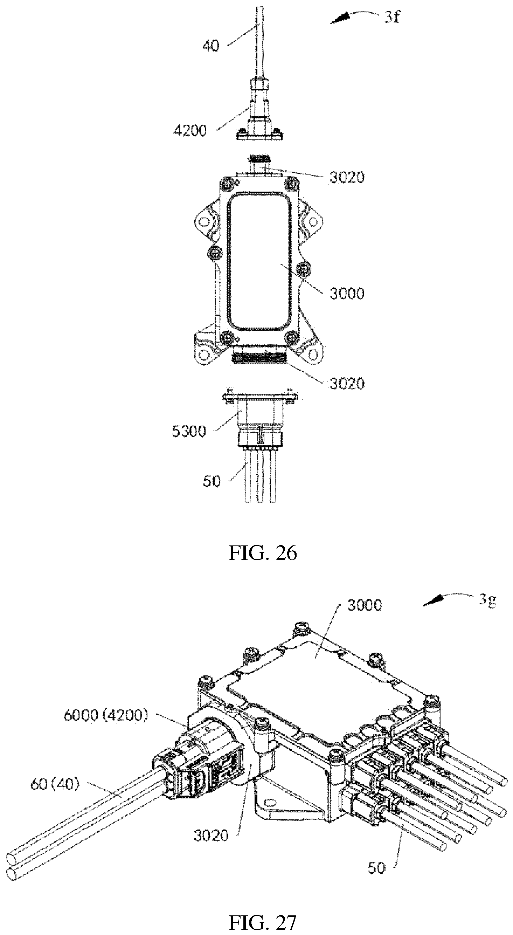

FIG. 26 is a schematic diagram of a structure of a splitter 3f according to a seventh embodiment of this application. The seventh embodiment of this application provides the splitter 3f. A difference from the first embodiment lies in that both a busbar component 40 and a plurality of branch line components 50 in the splitter 3f are detachably connected to a splitter body 30.

In this implementation, both a busbar connector 4200 and a branch line combination connector 5300 are detachably connected to a cable connection base 3020. When the busbar connector 4200 and the branch line combination connector 5300 are connected to the cable connection base 3020, both the busbar component 40 and a branch line combination 52 are electrically connected to a conductive component 3100 of the splitter body 30. When the busbar connector 4200, the branch line combination connector 5300, and the cable connection base 3020 are in a disassembled state, electrical connections between the busbar component 40 and the conductive component 3100 of the splitter body 30 and between the branch line combination 52 and the conductive component 3100 are disconnected. Shapes of two opposite end faces of the branch line connector 5200 and the cable connection base 3020 match, which helps improve structural stability when the branch line connector 5200 is in a connected state with the cable connection base 3020. In this embodiment, the busbar component 40 and the plurality of branch line components 50 are disposed to be detachably connected to the splitter body 30, so that convenience of disassembling and assembling the splitter 3 can be improved, and difficulty and costs of replacing and maintaining components inside the splitter 3 can be reduced.

A specific manner of detachable connection between the branch line connector 5200 and the cable connection base 3020 is not limited. For example, in the seventh embodiment shown in FIG. 26, the branch line connector 5200 and the cable connection base 3020 are detachably connected by using a screw and a screw hole.

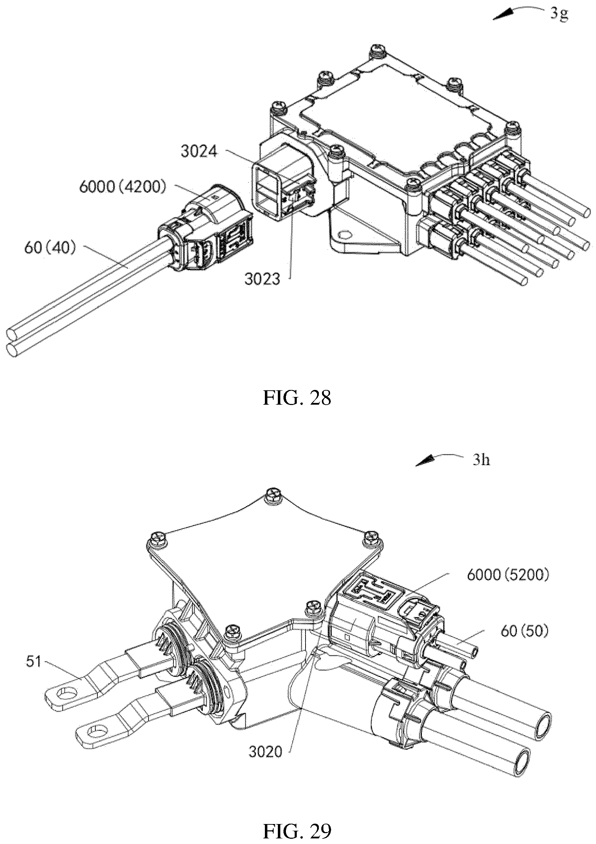

Refer to FIG. 27 and FIG. 28. FIG. 27 is a schematic diagram of a structure of a splitter 3g according to an eighth embodiment of this application. FIG. 28 is a partial exploded view of the splitter 3g according to the eighth embodiment of this application. The eighth embodiment of this application provides the splitter 3g. A difference from the first embodiment lies in that a detachable connection manner is using a buckle 3023 and a lock (not shown in the figure) for connection. In this embodiment, a cable connector 6000 and a cable connection base 3020 are detachably connected by using the buckle 3023 and the lock.

In an implementation, a lock block and an insertion slot (not shown in the figure) are disposed on an inner side that is of the cable connector 6000 and that faces the cable connection base 3020, an extension direction of the insertion slot is the same as an overall extension direction of the cable connector 6000, the buckle 3023 and an insertion block 3024 are disposed on an outer side that is of the cable connection base 3020 and that faces the cable connector 6000, and an extension direction of the insertion block 3024 is the same as the extension direction of the insertion slot. When the buckle 3023 is engaged with the lock, the insertion block 3024 is inserted into the insertion slot, so that a connection between the detachable component and the housing 3000 is fixed. When the buckle 3023 is disengaged from the lock, the insertion block 3024 slides out of the insertion slot, so that the detachable component is separated from the housing 3000. The engage means relative fastening, the disengage means relative separation, and a specific manner of disengage and engage between the buckle 3023 and the lock is not limited.

In this implementation, the insertion slot and the insertion block 3024 are disposed to guide disassembly and assembly of the cable connector 6000 and the cable connection base 3020. A size of an end that is of the cable connection base 3020 and that is close to the cable connector 6000 is slightly less than a size of an end that is of the cable connector 6000 and that is close to the cable connection base 3020, so that the end of the cable connection base 3020 can be inserted into the cable connector 6000.

Continue to refer to FIG. 28. In an implementation, the detachable cable component 60 is a busbar component 40, and a busbar connector 4200 is detachably connected to the cable connection base 3020 by using the buckle 3023 and the lock.

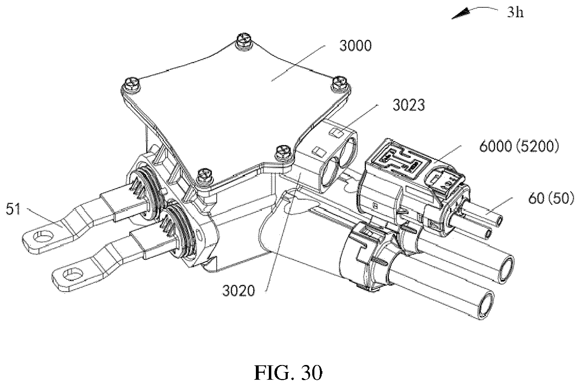

Refer to FIG. 29 and FIG. 30. FIG. 29 is a schematic diagram of a structure of a splitter 3h according to a ninth embodiment of this application. FIG. 30 is a partial exploded view of the splitter 3h according to the ninth embodiment of this application. In an implementation, the detachable cable component 60 is a branch line component 50, and a branch line connector 5200 is detachably connected to a cable connection base 3020 by using a buckle 3023 and a lock. The lock is disposed on an inner side that is of the branch line connector 5200 and that faces the cable connection base 3020, and the buckle 3023 is disposed on an outer side that is of the cable connection base 3020 and that faces the branch line connector 5200. When the buckle 3023 is engaged with the lock, a connection between the branch line component 50 and the housing 3000 is fixed. When the buckle 3023 is disengaged from the lock, the branch line component 50 is separated from the housing 3000.

In an implementation, an insertion slot is disposed on an inner side that is of the branch line connector 5200 and that faces the cable connection base 3020, and an extension direction of the insertion slot is the same as an overall extension direction of the busbar connector 4200. An insertion block 3024 is disposed on an outer side that is of the cable connection base 3020 and that faces the branch line connector 5200, and an extension direction of the insertion block 3024 is the same as the extension direction of the insertion slot. The insertion block 3024 slides in and slides out of the insertion slot, and the buckle 3023 and the lock are engaged and disengaged, so as to enable the branch line component 50 to be detachably connected to the housing 3000.

In an implementation, the detachable cable component 60 is a branch line combination 52 (not shown in the figure), and a branch line combination connector 5300 is detachably connected to the cable connection base 3020 by using the buckle 3023 and the lock.

It should be noted that, the implementation, position relationship, and structure description of detachable connection between the splitter body and the fuse 3120, the busbar plug structure 3011, the branch line plug structure 3012, the first interlock terminal 80a, the second interlock terminal 80b, the temperature control element 90, the sealing ring, and the busbar component or the branch line component in the first embodiment are also applicable to the implementation, position relationship, and structure description of detachable connection between the splitter body and the fuse 3120, the busbar plug structure 3011, the branch line plug structure 3012, the first interlock terminal 80a, the second interlock terminal 80b, the temperature control element 90, the sealing ring, and the busbar component or the branch line component in the second embodiment to the ninth embodiment. Details are not described herein again.

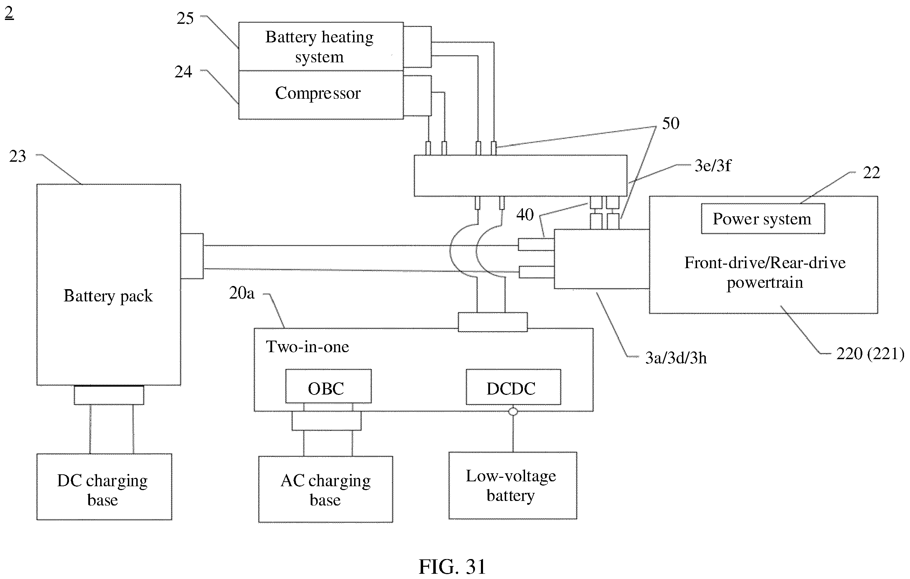

FIG. 31 to FIG. 35 are schematic diagrams of five different structures of an in-vehicle power supply system 2 according to an embodiment of this application. It should be noted that FIG. 31 to FIG. 35 are merely examples of the in-vehicle power supply system 2 provided in this embodiment of this application, and are not a limitation on a structure of the in-vehicle power supply system 2 provided in this embodiment of this application.

In the in-vehicle power supply system 2 shown in FIG. 31, a power system 22 includes either of a front-drive powertrain 220 or a rear-drive powertrain 221, and the vehicle may be understood as a single-drive electric vehicle. The power system of the single-drive electric vehicle may be placed at a position close to a front wheel to directly drive the front wheel or placed at a position close to a rear wheel to directly drive the rear wheel according to a design of the entire vehicle. The battery pack may supply power to the power system 22 by using any one of the splitters in the foregoing Embodiment 3a to Embodiment 3h, and in particular, may supply power to the power system 22 by using any one of the splitter 3a, the splitter 3d, and the splitter 3h. The splitter 3a, the splitter 3d, and the splitter 3h are separately the splitters provided in the second embodiment, the fifth embodiment, and the ninth embodiment of this application. One of the branch line components 50 in the splitters is a copper sheet 51, and may be directly inserted into the power system for electrical connection. Electric energy of the battery pack 23 is transmitted to the power system 22 by using the copper sheet branch line component for power supply. Because the power system 22 needs high-voltage power supply, using the copper sheet helps improve transmission efficiency. The splitter that supplies power to the power system may be referred to as a first main power splitter. In addition to being connected to the battery pack 23 by using a first busbar component of the splitter and connected to the power system 22 by using a first main power branch line component, to implement energy transmission between the battery pack 23 and the power system 22, the splitter (3a/3d/3h) is further connected to another splitter (3e/3f). The splitter (3e/3f) may be referred to as a first low-load splitter, the first main power splitter may distribute energy of the battery pack 23 to the first low-load splitter, and then the first low-load splitter supplies the energy to a corresponding load, for example, the compressor 24, the battery heating system 25, and a two-in-one system 20a. The first main power splitter herein may distribute the energy of the battery pack 23 to two paths, and the first low-load splitter may further distribute the energy provided by the battery pack 23 to three paths. In this embodiment of this application, the battery pack 23 directly supplies power to the power system 22 and a plurality of loads. The power distribution unit 20 may be simplified into the two-in-one system 20a. Only one external interface needs to be disposed on the two-in-one system 20a, which compared with the original power distribution unit 20, effectively reduces the size and optimizes line arrangement of the in-vehicle power supply system 2, thereby facilitating overall vehicle layout. It should be further noted that, branch line components connected to the battery heating system 25, the compressor 24, and the two-in-one system 20a may be respectively referred to as a first low-load branch line component, a second low-load branch line component, and a third low-load branch line component. In this embodiment, the branch line components are located on the first low-load splitter, and inputs of the branch line components are connected to the battery pack by using the first busbar component of the first main power splitter. Further, the branch line components are first connected to a first main power low-load branch line component of the first main power splitter by using a busbar component of the first low-load splitter, so as to connect to the first busbar component and then connect to the battery pack. The embodiment in FIG. 31 describes a case in which the first low-load branch line component and the second low-load branch line component are on the first main power splitter and the first low-load splitter. Actually, there may be a plurality of main power splitters and a plurality of low-load splitters based on different vehicle designs and configurations of an electrical device. The first low-load branch line component, the second low-load branch line component, and even the third low-load branch line component may be located on other main power splitters or low-load splitters, so as to implement different connection manners of electric devices on the vehicle, thereby affecting internal cabling design of the entire vehicle.

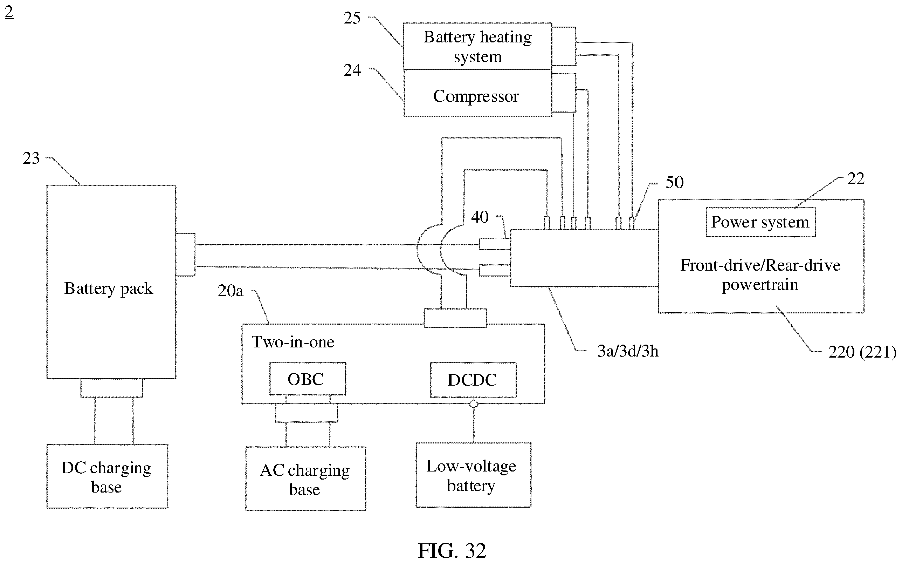

Compared with the in-vehicle power supply system 2 in FIG. 31, the in-vehicle power supply system 2 shown in FIG. 32 does not need the first low-load splitter. The first main power splitter has a plurality of branch line components, which may be used as a first low-load branch line component, a second low-load branch line component, and a third low-load branch line component, so as to implement a function of distributing energy of the battery pack into four paths to each power consuming unit.

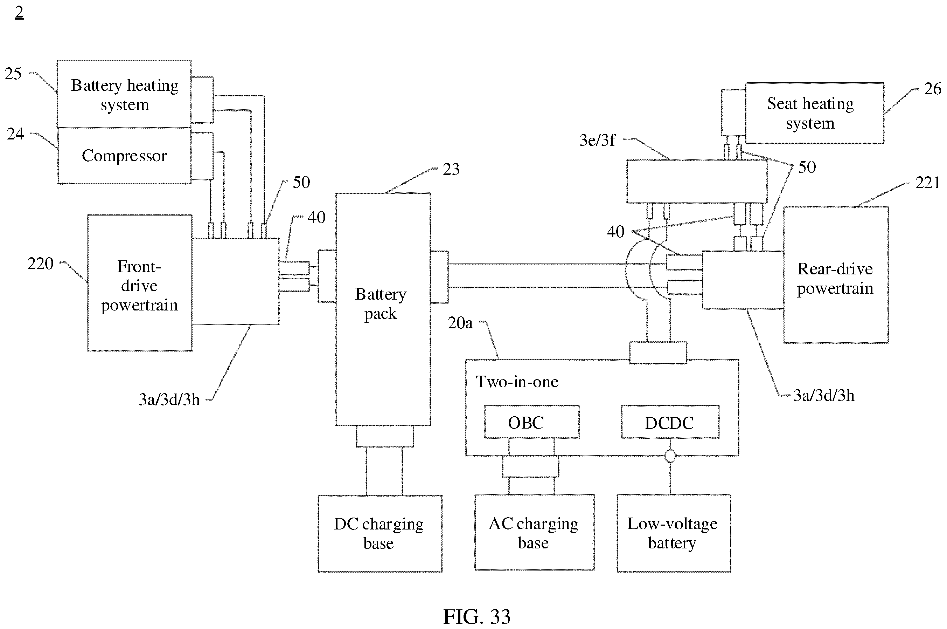

In the in-vehicle power supply system 2 shown in FIG. 33, the battery pack needs to supply power to a front-drive power system and a rear-drive power system. In addition, on the basis of the embodiment in FIG. 31 and

FIG. 32, a seat heating system 26 is further added as a load. In this case, two main power splitters may be configured, and the battery heating system 25 and the compressor 24 may be moved to a position close to the front-drive power system. The battery pack supplies power to the front-drive power system, the battery heating system, and the compressor by using a main power splitter connected to the front-drive power system. The battery pack supplies power to the rear-drive power system and the seat heating system by using a main power splitter connected to the rear-drive power system. A low-load splitter may alternatively be added between the seat heating system and the main power splitter. This is not specifically limited in this embodiment of this application. In the embodiment shown in FIG. 33, the main power splitter may be 3a, 3d, or 3h, and the low-load splitter may be 3e or 3f.

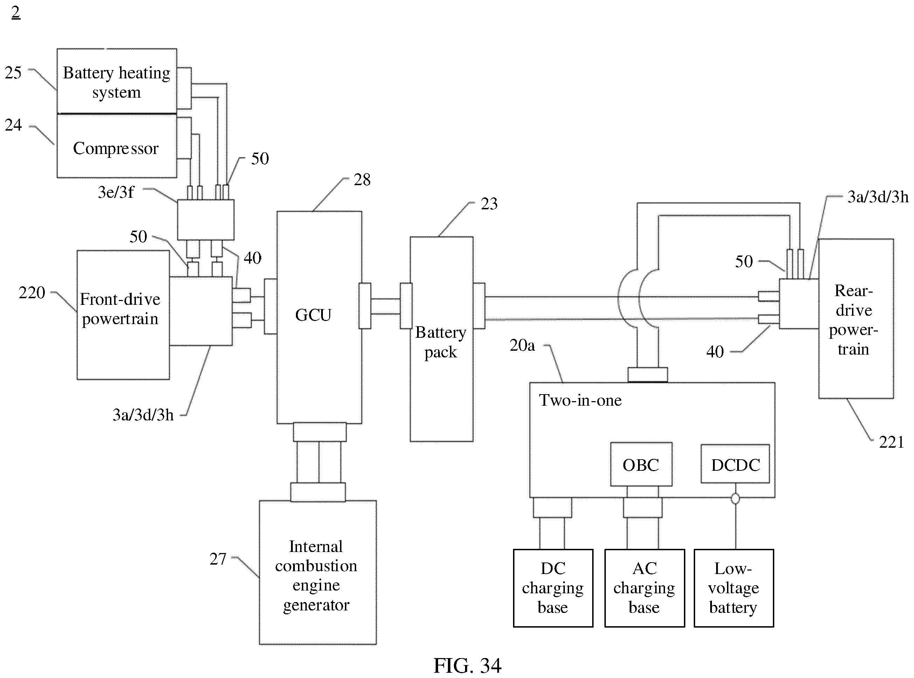

In the in-vehicle power supply system 2 shown in FIG. 34, the in-vehicle power supply system further includes an internal combustion engine generator 27 and a generator control unit 28 (GCU, Generator Control Unit). The power system 22 includes a front-drive powertrain 220 and a rear-drive powertrain 221. The internal combustion engine generator 27 generates electric energy, stores the electric energy in the battery pack 23 by using the generator control unit 28, and supplies power to the front-drive powertrain 220 by using a main power splitter connected to the generator control unit 28. The splitter may be any one of the splitter 3a, the splitter 3d, and the splitter 3h. Then power is supplied to the compressor 24 and the battery heating system 25 by using a low-load splitter. The low-load splitter may be the splitter 3e or 3f. The battery pack 23 supplies power to the two-in-one system 20a and the rear-drive powertrain 221 by using another main power splitter (which may be the splitter 3a, 3d, or 3h). The front-drive powertrain 220 and the rear-drive powertrain 221 are configured to drive wheels of the entire vehicle to rotate. In this case, the power system 22 is a hybrid power system. In this embodiment of this application, the internal combustion engine generator 27 supplies power to the front-drive powertrain 220, the rear-drive powertrain 221, and the plurality of loads. Only one external interface needs to be disposed on the two-in-one system 20a, so that a device size can be effectively reduced, and line arrangement of the in-vehicle power supply system 2 is optimized, thereby facilitating overall vehicle layout.

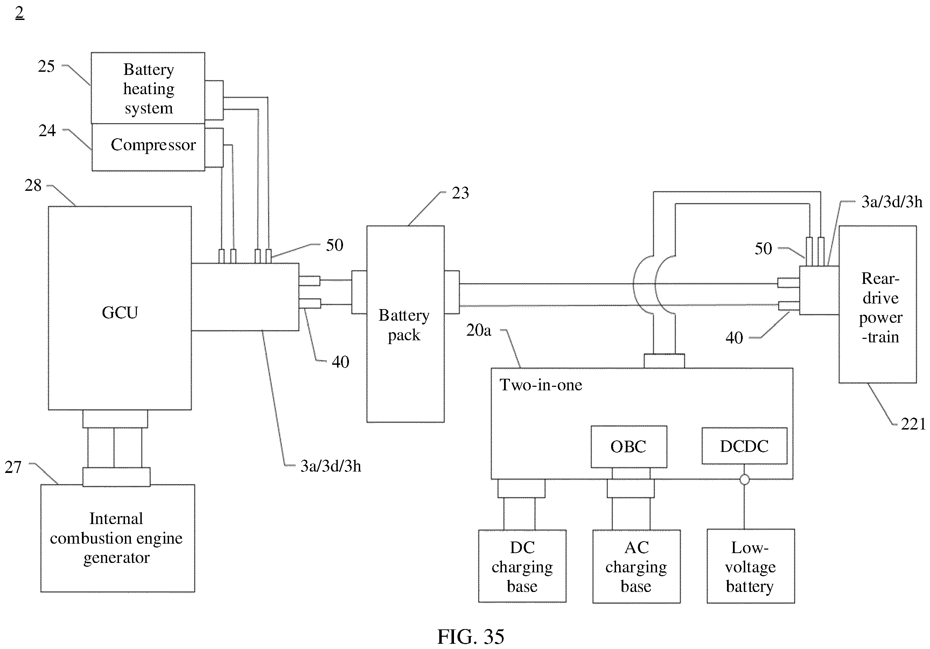

In the in-vehicle power supply system 2 shown in FIG. 35, the in-vehicle power supply system further includes an internal combustion engine generator 27 and a generator control unit 28. The power system 22 includes a rear-drive powertrain 221. In one aspect, the internal combustion engine generator 27 is connected to the battery pack by using a main power splitter connected to the internal combustion engine generator 27. The main power splitter may be any one of the splitter 3a, the splitter 3d, and the splitter 3h. In this way, the internal combustion engine generator 27 can charge the battery pack 23. In another aspect, several branch line components on the main power splitter may be configured to supply power to the compressor 24 and the battery heating system 25. The battery pack 23 supplies power to the two-in-one system 20a and the power system (rear-drive powertrain) 221 by using another main power splitter connected to the power system. The rear-drive powertrain 221 is configured to supply power to rear wheels. In this case, the power system 22 is a hybrid power system. Certainly, positions of the internal combustion engine generator 27 and the power system 221 may be exchanged, so that the vehicle is a front-drive vehicle. In this embodiment of this application, the internal combustion engine generator 27 supplies power to the rear-drive powertrain 221 and a plurality of loads, and only one external interface needs to be disposed on the two-in-one system 20a. Compared with the original power distribution unit 20, a size can be effectively reduced, and line arrangement of the in-vehicle power supply system 2 can be optimized, thereby facilitating overall vehicle layout.

The foregoing describes in detail the splitter 3, the in-vehicle power supply system 2, and the vehicle 1 provided in embodiments of this application. This specification describes the principles and embodiments of this application by using specific examples. The description about the foregoing embodiments is merely provided to help understand the method and the core idea of this application. In addition, a person of ordinary skill in the art may make variations and modifications to the specific embodiments and the application scope according to the idea of this application. Therefore, the content of this specification shall not be construed as a limitation on this application.

## Claims

1. An in-vehicle power supply system, comprising:
a battery pack, at least one power system, a battery heating system, a compressor, a two-in-one system, and at least one splitter; wherein
the battery heating system is configured to heat the battery pack;
the two-in-one system is configured to charge and discharge the battery pack;
the at least one splitter comprises at least one busbar component and a plurality of branch line components;
each of the busbar component comprises a positive busbar and a negative busbar, one end of the positive busbar is electrically connected to the plurality of branch line components, the other end of the positive busbar is connected to a positive electrode of the battery pack, one end of the negative busbar is electrically connected to the plurality of branch line components, and the other end of the negative busbar is connected to a negative electrode of the battery pack; and
the plurality of branch line components comprise at least one main power branch line component and a plurality of low-load branch line components, an input of the at least one main power branch line component is connected to the battery pack by using one of the at least one busbar component, an output of the at least one main power branch line component is connected to one of the at least one power system, inputs of the plurality of low-load branch line components are connected to the battery pack by using one of the at least one busbar component, and outputs of the plurality of low-load branch line components are separately connected to the battery heating system, the compressor, and the two-in-one system, wherein a current specification of the at least one main power branch line component is greater than those of the plurality of low-load branch line components, and the current specification is a cross-sectional area of a conductor.

2. The in-vehicle power supply system according to claim 1, wherein
the at least one splitter comprises a first main power splitter, the at least one busbar component comprises a first busbar component, the at least one main power branch line component comprises a first main power branch line component, the at least one power system comprises a first power system, the first busbar component and the first main power branch line component are located on the first main power splitter, and an output of the first main power branch line component is connected to the first power system;
the plurality of low-load branch line components comprise a first low-load branch line component, a second low-load branch line component, and a third low-load branch line component; and
an output of the first low-load branch line component is connected to the battery heating system, an output of the second low-load branch line component is connected to the compressor, and an output of the third low-load branch line component is connected to the two-in-one system.

3. The in-vehicle power supply system according to claim 2, wherein
the first low-load branch line component, the second low-load branch line component, and the third low-load branch line component are located on the first main power splitter, and an input of the first low-load branch line component, an input of the second low-load branch line component, and an input of the third low-load branch line component are connected to the battery pack by using the first busbar component.

4. The in-vehicle power supply system according to claim 2, wherein
the at least one splitter comprises a first low-load splitter, and the plurality of branch line components comprise a first main power low-load branch line component;
the first low-load branch line component, the second low-load branch line component, and the third low-load branch line component are located on the first low-load splitter;
the first main power low-load branch line component is located on the first main power splitter; and
an input of the first low-load branch line component, an input of the second low-load branch line component, and an input of the third low-load branch line component are connected to an output of the first main power low-load branch line component, and an input of the first main power low-load branch line component is connected to the battery pack by using the first busbar component.

5. The in-vehicle power supply system according to claim 2, wherein the at least one power system comprises a second power system, the at least one splitter comprises a second main power splitter, the at least one busbar component comprises a second busbar component, the plurality of branch line components comprise a second main power branch line component, and the second busbar component, the second main power branch line component, the first low-load branch line component, and the second low-load branch line component are located on the second main power splitter; and
an input of the second main power branch line component is connected to the battery pack by using the second busbar component, and an output of the second main power branch line component is connected to the second power system.

6. The in-vehicle power supply system according to claim 5, wherein the third low-load branch line component is located on the first main power splitter, and an input of the third low-load branch line component is connected to the battery pack by using the first busbar component.

7. The in-vehicle power supply system according to claim 5, comprising a seat heating system, wherein
the at least one splitter comprises a fourth low-load splitter, the plurality of branch line components comprise a fourth low-load branch line component and a second main power low-load branch line component, the third low-load branch line component and the fourth low-load branch line component are located on the fourth low-load splitter, and the second main power low-load branch line component is located on the first main power splitter; and
an output of the fourth low-load branch line component is connected to the seat heating system, an input of the third low-load branch line component and an input of the fourth low-load branch line component are connected to an output of the second main power low-load branch line component, and an input of the second main power low-load branch line component is connected to the battery pack by using the first busbar component.

8. The in-vehicle power supply system according to claim 2, wherein the at least one power system comprises a third power system, the at least one splitter comprises a third main power splitter and a third low-load splitter, the at least one busbar component comprises a third busbar component, the plurality of branch line components comprise a third main power branch line component and a third main power low-load branch line component, the third main power branch line component and the third main power low-load branch line component are located on the third main power splitter, and the first low-load branch line component and the second low-load branch line component are located on the third low-load splitter; and
an input of the third main power branch line component and an input of the third main power low-load branch line component are connected to the battery pack by using the third busbar component, an output of the third main power branch line component is connected to the third power system, and an input of the first low-load branch line component and an input of the second low-load branch line component are connected to an output of the third main power low-load branch line component.

9. The in-vehicle power supply system according to claim 8, comprising
a first internal combustion engine generator, configured to charge the battery pack or supply power to the at least one power system; wherein
the third busbar component is connected to the battery pack by using the first internal combustion engine generator.

10. The in-vehicle power supply system according to claim 2, comprising
a second internal combustion engine generator, configured to charge the battery pack or supply power to the at least one power system; wherein
the at least one power system comprises a fourth power system, the at least one splitter comprises a fourth main power splitter, the plurality of branch line components comprise a fourth main power branch line component, and the at least one busbar component comprises a fourth busbar component;
the first low-load branch line component, the second low-load branch line component, the fourth main power branch line component, and the fourth busbar component are located on the fourth main power splitter, and the third low-load branch line component is located on the first main power splitter; and
an input of the first low-load branch line component, an input of the second branch line component, and an input of the fourth main power branch line component are connected to the battery pack by using the fourth busbar component, and an output of the fourth main power branch line component is connected to the internal combustion engine generator.

11. A vehicle, comprising a vehicle body and the in-vehicle power supply system according to any one of claims 1 to 10, wherein the in-vehicle power supply system is installed on the vehicle body and is configured to drive the vehicle to travel.
